# EUROPEAN PATENT SPECIFICATION

(11) **EP 2 754 893 B1**
(45) Date of publication and mention of the grant of the patent: **20.07.2016**
(21) Application number: 12880049.7
(22) Date of filing: 14.09.2012
(51) Int. Cl.: F03D 80/00, F03B 13/26, F03D 1/00, F03B 17/06

(54) **METHOD FOR ASSEMBLING SHAFTING OF REGENERATED ENERGY POWER GENERATION DEVICE, AND TOOL FOR ASSEMBLING SHAFTING**
VERFAHREN ZUR WELLENMONTAGE EINER STROMERZEUGUNGSVORRICHTUNG AUF DER BASIS VON RÜCKGESPEISTER ENERGIE UND WERKZEUG ZUR WELLENMONTAGE
PROCÉDÉ D'ASSEMBLAGE D'UNE LIGNE D'ARBRES D'UN DISPOSITIF GÉNÉRATEUR DE PUISSANCE À ÉNERGIE RÉCUPÉRÉE, ET OUTIL D'ASSEMBLAGE D'UNE LIGNE D'ARBRES

(30) Priority: 29.06.2012 WO PCT/JP2012/004218
(43) Date of publication of application: 16.07.2014
(73) Proprietor: Mitsubishi Heavy Industries, Ltd., Tokyo 108-8215 (JP)
(72) Inventor: KAMEDA, Takuro, Tokyo 108-8215 (JP); FURUKAWA, Syogo, Tokyo 108-8215 (JP)
(74) Representative: Intès, Didier Gérard André
(86) International application number: PCT/JP2012/073590
(87) International publication number: WO 2014/002296

(56) References cited:
- CN-A- 101 089 388
- DE-A1-102008 052 412
- JP-A- 2004 092 755
- JP-A- 2007 263 305
- JP-A- 2011 526 985
- US-A1- 2012 134 811

## Description

### TECHNICAL FIELD

The present disclosure relates to a shafting assembly method and a shafting assembly jig for a power generating apparatus of a renewable energy type. A power generating apparatus of a renewable energy type herein is a power generating apparatus utilizing a renewable energy such as wind, tidal current, ocean current, and river current. For instance, a wind turbine generator, a tidal current generator, an ocean current generator, or a river current generator can be named.

### BACKGROUND ART

Recently, from the perspective of preserving the global environment, a power generating apparatus of a renewable energy type which includes a wind turbine generator utilizing wind energy and a generator utilizing tidal current, ocean current or river current has become increasingly popular. There is known a power generating apparatus of a renewable energy type comprising: a blade which receives renewable energy; a hub to which the blade is attached; a rotation shaft coupled to the hub; and a generator which converts rotation energy of the rotation shaft to electrical power.

A power generating apparatus of a renewable energy type has been growing in size from the perspective of improving power generation efficiency, and thus the load which acts on the rotation shaft tends to increase further. Therefore, there has been proposed a power generating apparatus of a renewable energy type which is configured to support the rotation shaft on the nacelle using a pair of bearings.

For instance, in the wind turbine generators disclosed in Patent Documents 1 to 8, a rotation shaft is supported on a nacelle via a pair of bearings including a front bearing which is closer to a hub and a rear bearing which is farther from the hub. Also, Patent Documents 6 to 9 disclose a configuration in which a bearing housing is provided integratedly for a front bearing and a second bearing.

Another prior art example can be found in US2012134811.

### [Citation List]

### [Patent Literature]

[Patent Document 1]
   US2011/0266806A
[Patent Document 2]
   WO2009/080712A
[Patent Document 3]
   WO2011/016108A
[Patent Document 4]
   US2011/0143880A
[Patent Document 5]
   TW201126062A
[Patent Document 6]

   KR10-2011-0070623A
[Patent Document 7]
   JP2009-19625A
[Patent Document 8]

   EP1780409A
[Patent Document 9]

   WO2007/119952A

### SUMMARY

### Technical Problem

In a case where a pair of bearing supports a rotation shaft, one of the bearings may be configured to receive thrust load while the other one of the bearings as a thrust free bearing receives radial load only.

However, due to the structure of a thrust free bearing, bearing components such as a race and a roller are allowed to move in the axial direction, and thus the thrust free bearing is not positioned stably in the axial direction during mounting of the bearings to the rotation shaft, which makes it difficult to perform the shafting assembly accurately.

In this regard, although Patent Documents 1 to 9 disclose a wind turbine generator where a rotation shaft is supported by a pair of bearings composed of a front bearing and a rear bearing, no solution is disclosed on how to improve the accuracy in the shafting assembly in a case where one of the bearings is a thrust free bearing.

A purpose of at least one embodiment of the present invention is to provide a shafting assembly method and a shafting assembly jig for a power generating apparatus of a renewable energy type, whereby it is possible to improve the accuracy in the shafting assembly in a case where a rotation shaft is supported by a pair of bearings including a thrust free bearing.

### [Solution to Problem]

An assembly method according to one embodiment of the present invention is for a shafting of a power generating apparatus of a renewable energy type which includes:
at least one blade;
a hub to which the at least one blade is attached;
a rotation shaft coupled to the hub; and
a first bearing and a second bearing which support the rotation shaft, and the method comprises:
   a step of placing the rotation shaft to stand upright along a vertical direction;
   a step of moving the first bearing relative to the rotation shaft to a first mounting position so that the rotation shaft standing upright is inserted into the first bearing which is a thrust free bearing;
   a step of holding the first bearing at the first mounting position by supporting the first bearing from below;
   a step of mounting the first bearing to the rotation shaft in a state where the first bearing is held at the first mounting position;
   a step of fixing a lower end of a spacer to the first bearing so that the spacer extends upward from the first bearing in a state where the first bearing is held at the first mounting position;
   a step of moving the second bearing relative to the rotation shaft to a second mounting position so that the rotation shaft standing upright is inserted into the second bearing and the second bearing contacts an upper end of the spacer;
   a step of fixing the second bearing to the upper end of the spacer; and
   a step of mounting the second bearing to the rotation shaft in a state where the second bearing is fixed to the upper end of the spacer.

Hereinafter, "thrust free bearing" cited in this specification includes a slide bearing or a roller bearing of any type which allows sliding in a determined range in the axial direction between a roller and a race, or between a race and a shaft or a bearing housing.

According to the above shafting assembly method, as the first bearing and the second bearing are mounted in a state where the rotation shaft is standing upright, it is possible to perform the bearing mounting work efficiently even with a rotation shaft of a large diameter. Also, when mounting the first bearing (thrust free bearing) to the erect rotation shaft, as the first bearing is held at the first mounting position by being supported from below, it is possible to mount the first bearing to the rotation shaft accurately. Moreover, as the second bearing is fixed to the upper end of the spacer whose lower end is fixed to the first bearing held at the first mounting position and then the second bearing is mounted to the rotation shaft at the second mounting position, the relative position of the second bearing with respect to the first bearing is accurately determined.

In some embodiment, a brake disc is attached to a lower end part of the rotation shaft standing upright, a brake pad being forced against the brake disc by a brake caliper which is fixed to a bearing housing of the first bearing; and in the step of holding the first bearing, the bearing housing of the first bearing is supported from below via the brake disc.

As a result, by supporting the bearing housing of the first bearing from below using a brake disc, it is possible to hold the first bearing at the first mounting position.

In some embodiment, in the step of fixing the lower end of the spacer to the first bearing, the first bearing is positioned with respect to the spacer in a radial direction of the rotation shaft by a socket-and-spigot joint; and in the step of fixing the second bearing to the upper end of the spacer, the second bearing is positioned with respect to the spacer in the radial direction of the rotation shaft by a socket-and-spigot joint.

When the centers of the first bearing and the second bearing supporting the rotation shaft are misaligned, load component in an unexpected direction acts on the bearings, thus raising the possibility of drastic decrease of the bearing lifetime. In this regard, by positioning each of the first bearing and the second bearing with respect to the spacer in the radial direction of the rotation shaft by the socket-and-spigot joint with the spacer, it is possible to perform alignment of the first bearing and the second bearing and thus to prevent the drastic decrease of the bearing lifetime caused by misalignment of the centers of the first bearing and the second bearing.

In some embodiments, the spacer includes a first cylinder disposed at a first bearing side, a second cylinder disposed at a second bearing side, and an annular member provided between the first cylinder and the second cylinder, and the method further comprises:
a step of mounting the rotation shaft to a nacelle of the power generating apparatus of a renewable energy type along with the first bearing and the second bearing which are connected by the spacer; and
after the step of mounting the rotation shaft, a step of removing the spacer from the first bearing and the second bearing by: removing the annular member from the first cylinder and the second cylinder; moving the first cylinder and the second cylinder in directions away from the first bearing and the second bearing along the rotation shaft, respectively; and then disconnecting the socket-and-spigot joint between the first cylinder and the first bearing and between the second cylinder and the second bearing.

As a result, by mounting the rotation shaft onto a nacelle along with the first bearing and the second bearing in a state where the first bearing and the second bearing are connected to each other by the spacer, it is possible to maintain the first bearing and the second bearing concentric with each other by the socket-and-spigot joint with the spacer even after mounting the rotation shaft onto the nacelle. Also, by adopting a spacer including a first cylinder, a second cylinder and an annular member, it is possible to disconnect the socket-and-spigot joint between the first cylinder and the first bearing and between the second cylinder and the second bearing, and thus to easily remove the spacer even after mounting the rotation shaft onto the nacelle.

In some embodiment, each of the first cylinder and the second cylinder includes a pair of half shells, and
in the step of removing the spacer, the pair of half shells of each of the first cylinder and the second cylinder is separated from each other in a state where the socket-and-spigot joint of each of the first cylinder and the second cylinder has been disconnected.

As a result, by separating each of the first cylinder and the second cylinder into half shells after the socket-and-spigot joint has been disconnected, it is even easier to remove the spacer.

In some embodiments, in the step of mounting the first bearing to the rotation shaft, an inner race of the first bearing is fit onto an outer circumferential surface of the rotation shaft at the first mounting position, and in the step of holding the first bearing, a first bearing component assembly where an outer race and a roller are attached to the bearing housing of the first bearing is supported from below and the first bearing component assembly is held around the inner race at the first mounting position. Also, a first stepped portion is provided at the first mounting position of the rotation shaft, and, in the step of mounting the first bearing to the rotation shaft, a first inner race fixing ring is fit onto the outer circumferential surface of the rotation shaft so as to contact the first stepped portion, the inner race is fit onto the outer circumferential surface of the rotation shaft so as to contact the first inner race fixing ring, a second inner race fixing ring is fit onto the outer circumferential surface of the rotation shaft so as to contact the inner race from an opposite side of the first inner race fixing ring across the inner race, and then a fixing nut is screwed to a thread formed on the outer circumferential surface of the rotation shaft so as to contact the second inner race fixing ring from an opposite side of the inner race across the second inner race fixing ring.

As a result, it is possible to easily mount the first bearing to the rotation shaft at the first mounting position.

Also, in the step of mounting the first bearing to the rotation shaft, a first seal ring may be disposed around the first inner race fixing ring to be attached to the bearing housing of the first bearing, and also a second seal ring may be disposed around the second inner race fixing ring to be attached to the bearing housing of the first bearing.

In some embodiment, the second bearing is a taper roller bearing which includes an inner race, a roller, an outer race formed of at least one pair of annular pieces, and a bearing housing,
in the step of fixing the second bearing to the upper end of the spacer, the bearing housing of the second bearing is fixed to the upper end of the spacer, and
in the step of mounting the second bearing to the rotation shaft, a first piece positioned on a first bearing side among the at least one pair of annular pieces of the outer race is attached to the bearing housing, a second bearing component assembly formed of the roller and the inner race is fit onto an outer circumferential surface of the rotation shaft at the second mounting position, and a second piece positioned on a side farther from the first bearing among the at least one pair of annular pieces of the outer race is attached to the bearing housing. Also, a second stepped portion is provided at the second mounting position of the rotation shaft, and
in the step of mounting the second bearing to the rotation shaft, a third inner race fixing ring is fit onto the outer circumferential surface of the rotation shaft so as to contact the second stepped portion, the second bearing component assembly is fit onto the outer circumferential surface of the rotation shaft so that the inner race contacts the third inner race fixing ring, a fourth inner race fixing ring is fit onto the outer circumferential surface of the rotation shaft so as to contact the inner race from an opposite side of the third inner race fixing ring across the second bearing component assembly, and a fixing nut is screwed to a thread formed on the outer circumferential surface of the rotation shaft so as to contact the fourth inner race fixing ring from an opposite side of the second bearing component assembly across the fourth inner race fixing ring.

As a result, it is possible to easily mount the second bearing to the rotation shaft at the second mounting position.

In the step of mounting the second bearing to the rotation shaft, a third seal ring may be disposed around the third inner race fixing ring to be attached to the bearing housing of the second bearing, and also a fourth seal ring may be disposed around the fourth inner race fixing ring to be attached to the bearing housing of the second bearing.

In some embodiment, the spacer remains after mounting the rotation shaft to a nacelle of the power generating apparatus of a renewable energy type, the spacer serving as a connection member between the first bearing and the second bearing while the power generating apparatus of a renewable energy type is operated.

As a result, the first bearing and the second bearing are connected to each other by the spacer, and the bearing housing of each of the bearings is bound by the spacer. Therefore, even if a complex load and moment from the renewable energy source is inputted into the rotation shaft during operation of the power generating apparatus of a renewable energy type, it is possible to maintain the bearings concentric with each other by the function of the spacer.

In some embodiment, the spacer has a cylindrical shape which surrounds the rotation shaft mounted on the nacelle and a pair of cutouts is formed on the spacer at both sides of the rotation shaft, respectively.

As a result, even in a case where the spacer remains as a connection member after the rotation shaft is mounted onto the nacelle, it is possible to utilize the space formed by the cutout on the spacer for a variety of purposes (for instance, suspension of components using a lift such as a crane).

In some embodiment, the assembly method for the shafting further comprises a step of lifting the rotation shaft together with the first bearing and the second bearing by a lift and mounting the rotation shaft to a nacelle of the power generating apparatus of a renewable energy type in a state where the first bearing and the second bearing are connected with each other by the spacer.

The rotation shaft is usually mounted to the nacelle inclining so that a predetermined angle (tilt angle) is formed with respect to the horizontal direction. In this case, upon mounting the rotation shaft to the nacelle, lifting up the rotation shaft by a lift (a crane, for instance) using an eyebolt and the like provided for the bearing housing causes component force to act on the first bearing (thrust free bearing) in the axial direction of the rotation shaft corresponding to the tilt angle, raising the possibility that the first bearing moves or get damaged. In this regard, by performing the lifting of the rotation shaft in the state where the first bearing and the second bearing are connected to each other by the spacer as described above, it is possible to prevent misalignment of or damage to the first bearing.

In some embodiment, the assembly method of the shafting further comprises, after the step of mounting the rotation shaft to the nacelle, a step of connecting an upper part of the bearing housing of the first bearing and an upper part of the bearing housing of the second bearing by a connection frame.

As a result, the bearing housing of the first bearing and the bearing housing of the second bearing are connected to each other by the connection frame, and the bearing housing of each of the bearings is bound by the connection frame. Therefore, even if a complex load and moment from the renewable energy source is inputted into the rotation shaft during operation of the power generating apparatus of a renewable energy type, it is possible to maintain the bearings concentric by the function of the connection frame.

In the bearing housing of each of the first bearing and the second bearing, an inner flow path may be formed for supplying a lubricant oil to a rolling surface or a sliding surface of said each of the first bearing and the second bearing.

A shafting assembly jig according to at least one embodiment of the present invention is used for a shafting of a power generating apparatus of a renewable energy type which includes at least one blade, a hub to which the at least one blade is attached, a rotation shaft coupled to the hub, and a first bearing and a second bearing which support the rotation shaft, the shafting assembly jig being provided for mounting the first bearing and the second bearing to the rotation shaft while the first bearing which is a thrust free bearing is supported from below in a state where the rotation shaft is placed standing upright in a vertical direction, and the shafting assembly jig comprises:
a lower end configured to be fixed to the first bearing which is held at the first mounting position by being supported from below around the rotation shaft standing upright, and
an upper end to which the second bearing is fixable at the second mounting position at an opposite side of the first bearing across the shafting assembly jig, in a state where the first bearing is held at the first mounting position.

According to the above shafting assembly jig, it is possible to fix the second bearing to the upper end of the shafting assembly jig whose lower end is fixed to the first bearing (thrust free bearing) which is held at the first mounting position, and to mount the second bearing to the rotation shaft at the second mounting position. Therefore, upon mounting the first bearing and the second bearing to the rotation shaft in the state of standing upright, it is possible to accurately determine the relative position of the second bearing with respect to the first bearing.

In some embodiment, the first bearing is positioned with respect to the shafting assembly jig in a radial direction of the rotation shaft by a socket-and-spigot joint between the lower end and the first bearing, and the second bearing is positioned with respect to the shafting assembly jig in the radial direction of the rotation shaft by a socket-and-spigot joint between the upper end and the second bearing.

As a result, by positioning each of the first bearing and the second bearing in the radial direction of the rotation shaft with respect to the shafting assembly jig, it is possible to perform alignment of the first bearing and the second bearing, and thus to prevent drastic decrease of the bearing lifetime caused by misalignment of the centers of the first bearing and the second bearing.

In some embodiment, the shafting assembly jig further comprises: a first cylinder which is positioned on a first bearing side and forms the lower end; a second cylinder which is positioned on a second bearing side and forms the upper end; and an annular member provided removably between the first cylinder and the second cylinder.

As a result, in the state where the first bearing and the second bearing are mounted to the rotation shaft, it is possible to disconnect the socket-and-spigot joint between first bearing and the spacer and between the second bearing and the spacer, and thus to easily remove the spacer.

Further, each of the first cylinder and the second cylinder may include a pair of half shells which can be divided.

As a result, by dividing the first cylinder and the second cylinder into half shells after disconnecting the socket-and-spigot joint, it is even easier to remove the spacer.

### ADVANTAGEOUS EFFECTS

According to at least one embodiment of the present invention, as the first bearing and the second bearing are mounted in the state where the rotation shaft is standing upright, it is possible to perform the bearing mounting work efficiently even with a rotation shaft of a large diameter. Also, upon mounting the first bearing (thrust free bearing) to the erect rotation shaft, by holding the first bearing at the first mounting position by supporting from below, it is possible to accurately mount the first bearing to the rotation shaft. Moreover, as the second bearing is fixed to the upper end of the spacer whose lower end is fixed to the first bearing held at the first mounting position and then the second bearing is mounted to the rotation shaft at the second mounting position, the relative position of the second bearing with respect to the first bearing is accurately determined.

### BRIEF DESCRIPTION OF DRAWINGS

Fig. 1 is schematic view of an overall configuration of a wind turbine generator according to one embodiment.
Fig. 2 is an oblique perspective view of an exemplary configuration inside a nacelle of a wind turbine generator according to one embodiment.
Fig. 3 is a side view of a shafting of the wind turbine generator shown in Fig. 2.
Fig. 4 is a cross-sectional view of the shafting shown in Fig. 3.
Fig. 5 is an enlarged view of an area indicated by reference "A" in Fig. 4.
Fig. 6 is an enlarged view of an area indicated by reference "B" in Fig. 4.
Figs. 7A to 7C are illustrations of the steps of mounting the first bearing to the rotation shaft according to one embodiment.
Figs. 8A to 8C are illustrations of the steps of fixing the spacer to the first bearing according to one embodiment.
Fig. 9 is an illustration of a socket-and-spigot joint between the spacer and the first bearing.
Figs. 10A to 10C are illustrations of the steps of mounting the second bearing to the rotation shaft according to one embodiment.
Fig. 11 is an illustration of a socket-and-spigot joint between the spacer and the second bearing.
Fig. 12 is an illustration of installation of the rotation shaft to the nacelle, where the first bearing and the second bearing are mounted to the rotation shaft.
Figs. 13A to 13C are illustrations of the steps of removing the spacer from a pair of bearing housings.
Fig. 14 is an oblique perspective view of an interior structure of a nacelle of a wind turbine generator including a connection frame provided between a pair of bearing housings.

### DETAILED DESCRIPTION OF EMBODIMENTS

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

Hereinafter, a power generating apparatus of a renewable energy type which is an object of the shafting assembly method according to one embodiment of the present invention will be described, and then, the shafting assembly method will be described.

While a wind turbine generator is described as an example of a power generating apparatus of a renewable energy type, the shafting assembly method according to the embodiment of the present invention can be applied to other power generating apparatuses of a renewable energy type such as a tidal current generator, an ocean current generator, and a river current generator.

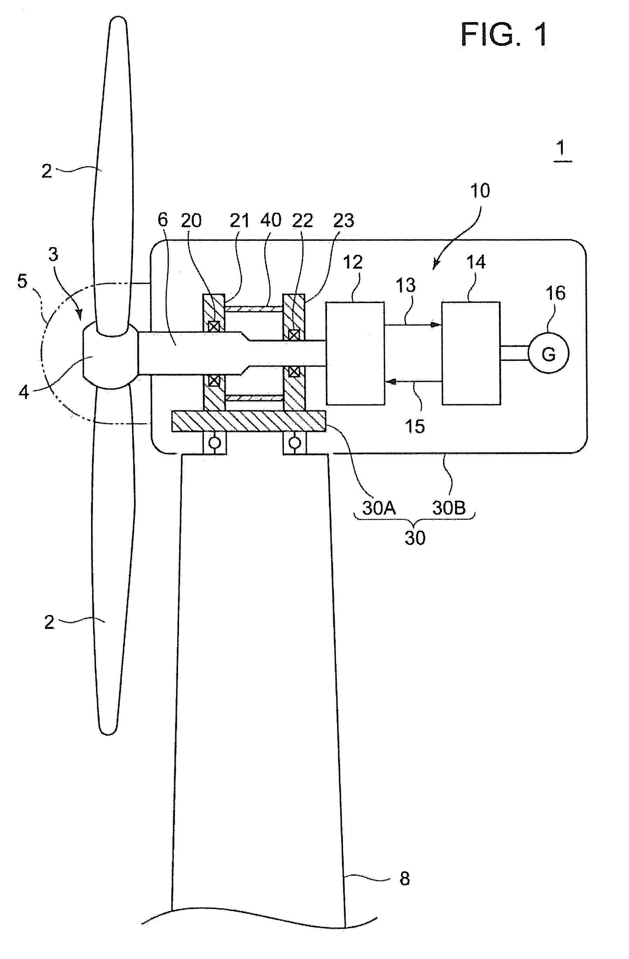

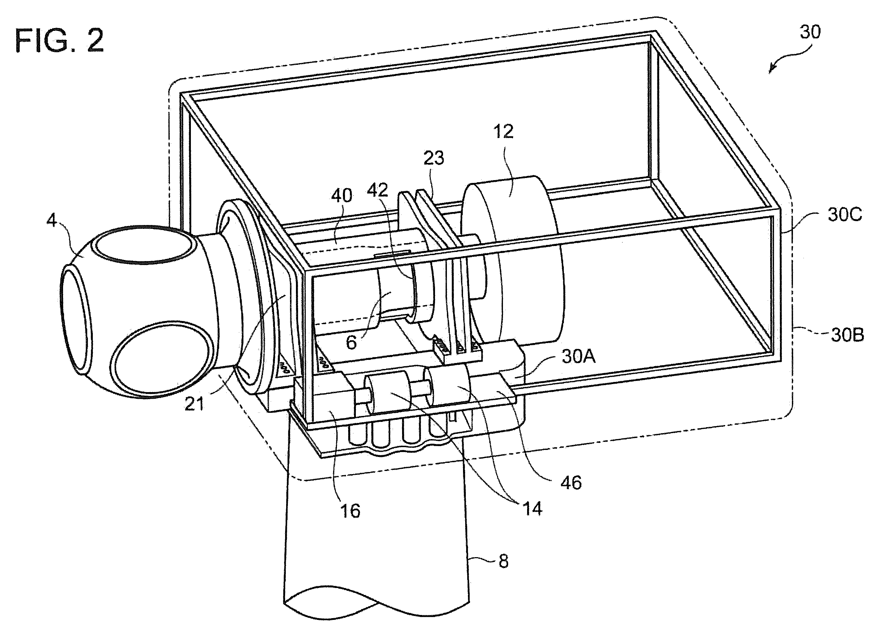

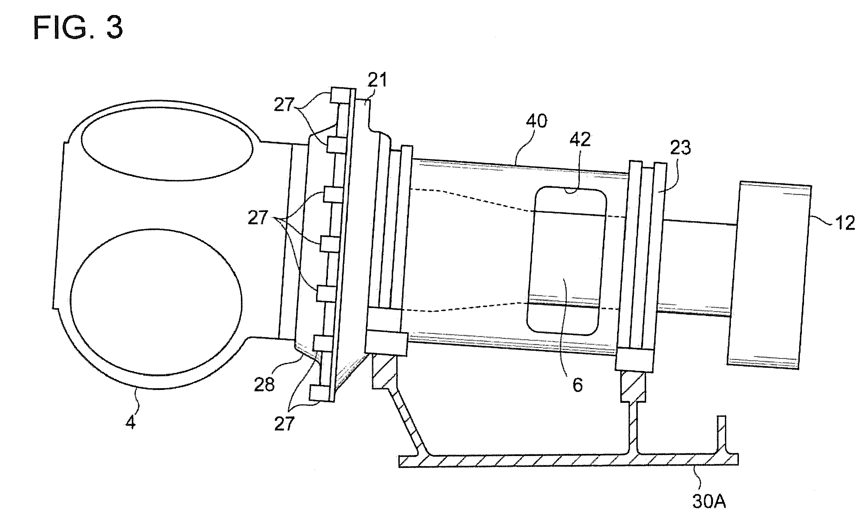

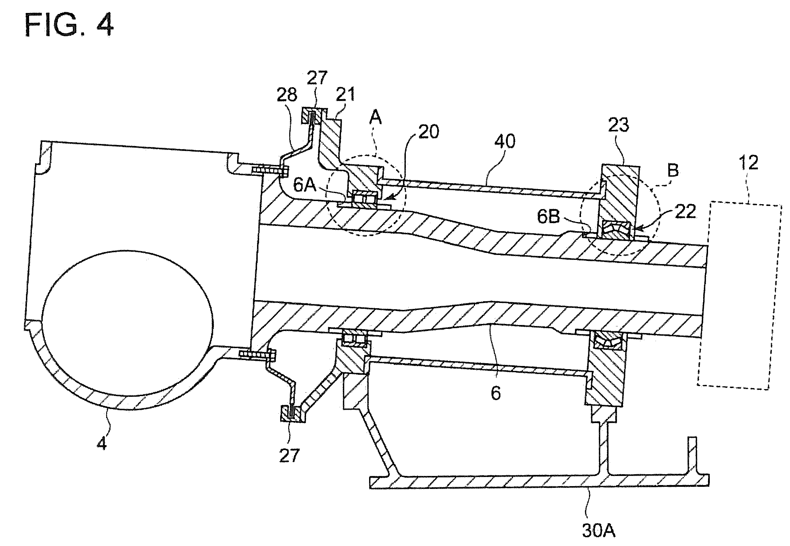

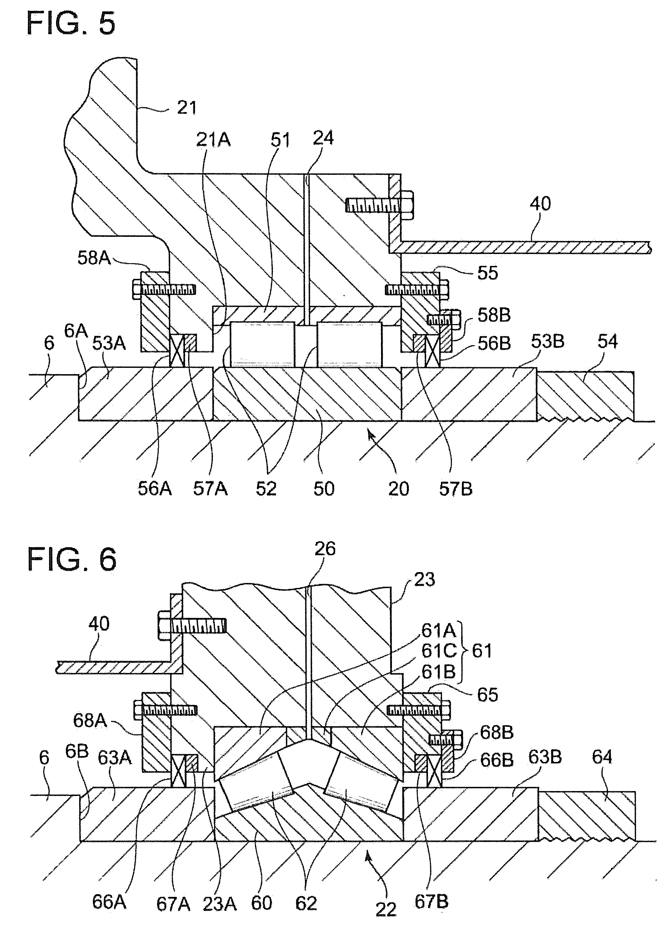

Fig. 1 is schematic view of an overall configuration of a wind turbine generator according to one embodiment. Fig. 2 is an oblique perspective view of an exemplary configuration inside a nacelle of a wind turbine generator according to one embodiment. Fig. 3 is a side view of a shafting of the wind turbine generator shown in Fig. 2. Fig. 4 is a cross-sectional view of the shafting shown in Fig. 3. Fig. 5 is an enlarged view of an area indicated by the reference "A" of Fig. 4. Fig. 6 is an enlarged view of an area indicated by the reference "B" of Fig.4.

As shown in Fig. 1, the wind turbine generator 1 includes a rotor 3 composed of at least one blade 2 and a hub 4, a rotation shaft 6 coupled to the hub 4, a generator 16 which generates electrical power, and a drive train 10 which transmits rotation energy of the rotation shaft 6 to the generator 16.

Herein, various equipments including the rotation shaft 6 may be housed in a nacelle 30 which is disposed atop a tower 8 standing on the water or on the ground and may be covered by a nacelle cover 30B of the nacelle 30. Also, the hub 4 may be covered by a hub cover 5.

In some embodiment, as shown in Fig. 1, the drive train 10 includes a hydraulic pump 12 attached to the rotation shaft 6, and a hydraulic motor 14 connected to the hydraulic pump 12 via a high pressure oil line 13 and a low pressure oil line 15. The hydraulic pump 12 is configured to be driven by the rotation shaft 6 and to pressurize a working oil so as to generate a high pressure working oil (pressurized oil). The outlet of the hydraulic pump 12 is connected to the inlet of the hydraulic motor 14 via the high pressure oil line 13. Thus, the pressurized oil generated in the hydraulic pump 12 is supplied to the hydraulic motor 14 via the high pressure oil line 13, so that the hydraulic motor 14 is driven by the pressurized oil. The low pressure working oil having performed work in the hydraulic motor 14 is returned again to the hydraulic pump 12 via the low pressure oil line 15 provided between the outlet of the hydraulic motor 14 and the inlet of the hydraulic pump 12. The output shaft of the hydraulic motor 14 is connected to the rotational shaft of the generator 16, so that rotation of the hydraulic motor 14 is inputted into the generator 16.

Herein, the number of each of the hydraulic pump 12, the hydraulic motor 14 and the generator 16 is not necessarily limited, and may be one at the least.

In one embodiment, the drive train 10 and the generator 16 are disposed inside the nacelle 30.

In the exemplary embodiment shown in Fig. 2, the nacelle 30 includes a nacelle base plate 30A which supports the bearing housing 21, 22 of each of the bearings 20, 22, a nacelle cover 30B which covers various equipments placed on the nacelle base plate 30A, and a nacelle frame 30C to which the nacelle cover 30B is fixed. The nacelle base plate 30A is formed of a cast steel such as a ductile cast iron or a high strength cast iron, for instance.

The hydraulic pump 12 is attached to an end of the rotation shaft 6. Also, at both sides of the rotation shaft 6, a pair of equipment placement tables is provided respectively (however, only the equipment placement table 46 at the near side is shown in Fig. 2), and a pair of a hydraulic motors 14 and a generator 16 are disposed on each of the equipment placement tables 46. The equipment placement tables 46 are supported by the nacelle base plate 30A and the nacelle frame 30C attached thereto.

The rotation shaft 6 is, as shown in Figs. 1 to 4, supported rotatably to the nacelle 30 via the first bearing 20 and the second bearing 22. The first bearing 20 is positioned at the hub 4 side and the second bearing 22 is positioned farther from the hub 4 compared to the first bearing 20. In some embodiment, the bearing housing 21, 23 of each of the bearings 20, 22 is supported by the nacelle base plate 30A of the nacelle 30, and also connected to each other by a connection member 40 of a cylindrical shape.

The connection member 40 may have a pair of cutouts 42 formed at both sides of the rotation shaft, respectively. The space formed by the cutout 42 can be used for a variety of purposes (for instance, suspension of components using a lift such as a crane).

Further, at least one brake caliper 27 is fixed directly or indirectly to the bearing housing 21 of the first bearing 20. The brake caliper 27 is configured to force a brake pad against a brake disc 28 which is fastened to the hub 4 with a flange of the rotation shaft 6, so as to apply braking force to the rotor 3 and the rotation shaft 6.

In one embodiment, as shown in Figs. 3 and 4, the rotation shaft 6 has a smaller diameter in the area around the mounting position of the second bearing 22 (the second mounting position) compared to the diameter in the area around the mounting position of the first bearing 20 (the first mounting position). In other words, the rotation shaft 6 has a diameter which decreases from the area around the first mounting position toward the area around the second mounting position.

In a case where the rotation shaft 6 is supported by a pair of the bearings 20, 22, the first bearing 20 is disposed closer to the hub 4 compared to the second bearing 22 and thus receives larger load. Therefore, by decreasing the diameter of the rotation shaft 6 from the area around the first mounting position toward the area around the second mounting position, it is possible to adopt the first bearing 20 of a larger size than the second bearing 22 and thus to improve durability of the first bearing 20. Also, as the rotation shaft 6 at the area around the second mounting position has a relatively small diameter, it is possible to reduce weight of the rotation shaft 6 and to reduce weight and size of the second bearing 22.

Further, in the area around the first mounting position, a first stepped portion 6A is provided for restricting the inner race of the first bearing 20 from moving toward the hub 4. Similarly, in the area around the second mounting position, a second stepped portion 6B is provided for restricting the inner race of the second bearing 22 from moving toward the hub 4.

Also, the outer circumferential surface of the rotation shaft 6 is upraised so as to form the second stepped portion 6B, the diameter of the rotation shaft 6 slightly increasing at the upraised part. The diameter of the rotation shaft 6 at the upraised part is set smaller than the diameter of the inner race of the first bearing 20. As a result, it is possible to adopt the shafting assembly method in which the first bearing 20 and the second bearing 22 are fit around the rotation shaft 6 in this order from the end of the rotation shaft 6 at the farther side from the hub 4.

In some embodiment, as shown in Fig. 5, the first bearing 20 includes an inner race 50 fit onto the outer circumference of the rotation shaft 6, an outer race 51 fit onto the inner circumference of the bearing housing 21, and a roller 52 provided between the inner race 50 and the outer race 51. All of the inner race 50, the outer race 51, and the bearing housing 21 have a ring shape continuous in the circumferential direction, which is a so-called seamless structure.

In the exemplary embodiment shown in Fig. 5, the first bearing 20 is a cylindrical roller bearing (an example of a thrust free bearing) where the roller 52 formed of a cylindrical roller is fit into a groove provided on the outer race 51 so that the position of the roller 52 is restricted in the axial direction with respect to the outer race 51 but the roller 52 is movable in the axial direction with respect to the inner race 50.

Further, in the exemplary embodiment shown in Fig. 5, at both sides of the inner race 50 of the first bearing 20, a pair of inner race fixing rings (53A, 53B) are provided, respectively. That is, the inner race 50 is disposed so as to be sandwiched between a first inner race fixing ring 53A positioned on the side closer to the hub 4 and a second inner race fixing ring 53B positioned on the side farther from the hub 4.

The first inner race fixing ring 53A is fit onto the rotation shaft 6 so as to contact the first stepped portion 6A provided for the rotation shaft 6. Also, on the opposite side of the inner race 50 across the second inner race fixing ring 53B, a fixing nut 54 is disposed, the fixing nut 54 having a female thread which is configured to be screwed to a male thread formed on the outer circumference of the rotation shaft 6. Thus, the inner race 50 is forced against the side of the first inner race fixing ring 53A which is in contact with the first stepped portion 6A by the fastening force of the fixing nut 54 transmitted to the inner race 50 via the second inner race fixing ring 53B, so that the position of the inner race 50 is restricted in the axial direction. Also, instead of the fastening force by the fixing nut 54, the fastening force by a shrink disc may be utilized for restricting the position of the inner race 50 in the axial direction, for instance.

On the other hand, the outer race 51 of the first bearing 20 is sandwiched between: a projection 21A which projects inward in the radial direction from the bearing housing 21 along the outer circumferential surface of the rotation shaft 6; and an outer race fixing plate 55 attached to the bearing housing 21, so that the position of the outer race 51 is restricted in the axial direction.

In the bearing housing 21 of the first bearing 20, an inner flow path 24 is provided for supplying a lubricant oil to a rolling contact surface between the roller 52 and the inner race 50 or the outer race 51 of the first bearing 20. The inner flow path 24 runs through the outer race 51 and communicates with the annular space (where the roller 52 is disposed) between the inner race 50 and the outer race 51. The annular space is filled with the lubricant oil supplied via the inner flow path 24.

In some embodiment, for the purpose of preventing leakage of the lubricant oil from the annular space between the inner race 50 and the outer race 51, a seal ring (56A, 56B) is provided. In the exemplary embodiment shown in Fig. 5, a seal ring 56A, and a spacer ring 57A adjacent to the seal ring 56A are inserted and held between the bearing housing 21 and the seal fixing plate 58A attached to the bearing housing 21. On the other hand, a seal ring 56B, and a spacer ring 57B adjacent to the seal ring 56B are inserted and held between an outer race fixing plate 55 and a seal fixing plate 58B attached to the outer race fixing plate 55.

Herein, the spacer ring (57A, 57B) is provided for the purpose of recovering the sealability in a case where the inner race fixing ring (53A, 53B) has become worn by the contact with the seal ring (56A, 56B). That is, when the inner race fixing ring (53A, 53B) has become worn and the sealability has decreased, the positions of the seal ring (56A, 56B) and the spacer ring (57A, 57B) are reversed so that the seal ring (56A, 56B) contacts the inner race fixing ring (53A, 53B) at a different position, which enables recovering the sealability.

In some embodiment, as shown in Fig. 6, the second bearing 22 includes an inner race 60 fit onto the outer circumference of the rotation shaft 6, an outer race 61 fit onto the inner circumference of the bearing housing 23, and a roller 62 provided between the inner race 60 and the outer race 61. All of the inner race 60, the outer race 61, and the bearing housing 23 have a ring shape continuous in the circumferential direction, which is a so-called seamless structure.

In the exemplary embodiment shown in Fig. 6, the second bearing 22 is a taper roller bearing where the roller 62 is a tapered roller. The taper roller bearing is designed to receive axial load (thrust load) and thus is not a "thrust free bearing".

Further, in the exemplary embodiment shown in Fig. 6, at both sides of the inner race 60 of the second bearing 22, a pair of inner race fixing rings (63A, 63B) is provided, respectively. That is, the inner race 60 is disposed so as to be sandwiched between a third inner race fixing ring 63A positioned on the side closer to the hub 4 and a fourth inner race fixing ring 63B positioned on the side farther from the hub 4.

The third inner race fixing ring 63A is fit onto the rotation shaft 6 so as to contact the second stepped portion 6B provided for the rotation shaft 6. Also, on the opposite side of the inner race 60 across the fourth inner race fixing ring 63B, a fixing nut 64 is disposed, the fixing nut 64 having a female thread which is configured to be screwed to a male thread formed on the outer circumference of the rotation shaft 6. Thus, the inner race 60 is forced against the side of the third inner race fixing ring 63A which is in contact with the second stepped portion 6B by the fastening force of the fixing nut 64 transmitted to the inner race 60 via the fourth inner race fixing ring 63B, so that the position of the inner race 60 is restricted in the axial direction. Also, instead of the fastening force by the fixing nut 64, the fastening force by a shrink disc may be utilized for restricting the position of the inner race 60 in the axial direction, for instance.

On the other hand, the outer race 61 of the second bearing 22 is sandwiched between: a projection 23A which projects inward in the radial direction from the bearing housing 23 along the outer circumferential surface of the rotation shaft 6; and an outer race fixing plate 65 attached to the bearing housing 23, so that the position of the outer race 61 is restricted in the axial direction. The outer race 61 may be composed of a pair of annular pieces (61A, 61B) each of which has a cross section of a trapezoidal shape and an intermediate piece 61C provided between the annular pieces 61A, 61B.

In the bearing housing 23 of the second bearing 22, an inner flow path 26 is provided for supplying a lubricant oil to a rolling contact surface between the roller 62 and the inner race 60 or the outer race 61 of the second bearing 22. The inner flow path 26 runs through the outer race 61 and communicates with the annular space (where the roller 62 is disposed) between the inner race 60 and the outer race 61. The annular space is filled with the lubricant oil supplied via the inner flow path 26.

In some embodiment, for the purpose of preventing leakage of the lubricant oil from the annular space between the inner race 60 and the outer race 61, a seal ring (66A, 66B) is provided. In the exemplary embodiment shown in Fig. 6, a seal ring 66A and a spacer ring 67A are inserted and held between the bearing housing 23 and the seal fixing plate 68A attached to the bearing housing 23. On the other hand, a seal ring 66B and a spacer ring 67B are inserted and held between an outer race fixing plate 65 and a seal fixing plate 68B attached to the outer race fixing plate 55.

Herein, the spacer ring (67A, 67B) is provided for the purpose of recovering the sealability in a case where the inner race fixing ring (63A, 63B) has become worn by the contact with the seal ring (66A, 66B). That is, when the inner race fixing ring (63A, 63B) has become worn and the sealability has decreased, the positions of the seal ring (66A, 66B) and the spacer ring (67A, 67B) are reversed so that the seal ring (66A, 66B) contacts the inner race fixing ring (63A, 56B) at a different position, which enables recovering the sealability.

In some embodiment, when assembling the above shafting, the first bearing 20 and the second bearing 22 are mounted to the rotation shaft 6 in a state where the rotation shaft 6 is placed standing upright in the vertical direction. The outline of the shafting assembly method according to some embodiment will be described as follows.

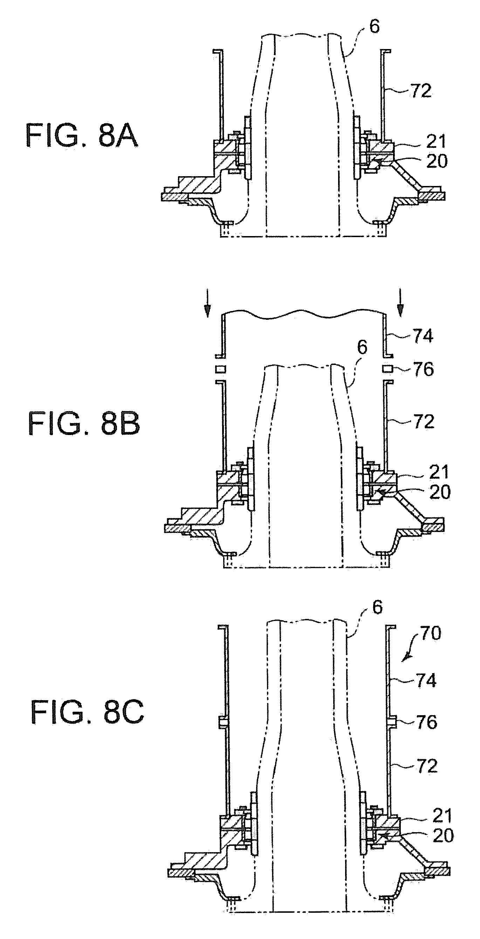

The first bearing ("the first bearing" described herein represents not only the first bearing 20 but the bearing unit as a whole including the bearing housing 21) is moved relative to the rotation shaft 6 to a first mounting position so that the rotation shaft 6 standing upright is inserted into the first bearing. Then, in the state where the first bearing is supported from below and held at the first mounting position, the first bearing is mounted to the rotation shaft 6. Further, in the state where the first bearing is held at the first mounting position, a lower end of a spacer (for instance, a spacer 70 shown in Figs. 8A to 8C) is fixed to the first bearing so that the spacer extends upward from the first bearing. Subsequently, the second bearing ("the second bearing" described herein represents not only the second bearing 22 but the bearing unit as a whole including the bearing housing 23) is moved relative to the rotation shaft 6 to a second mounting position so that the rotation shaft 6 standing upright is inserted into the second bearing and the second bearing contacts an upper end of the spacer. After this, the second bearing is fixed to the upper end of the spacer. Finally, in the state where the second bearing is fixed to the upper end of the spacer, the second bearing is mounted to the rotation shaft 6 at the second mounting position.

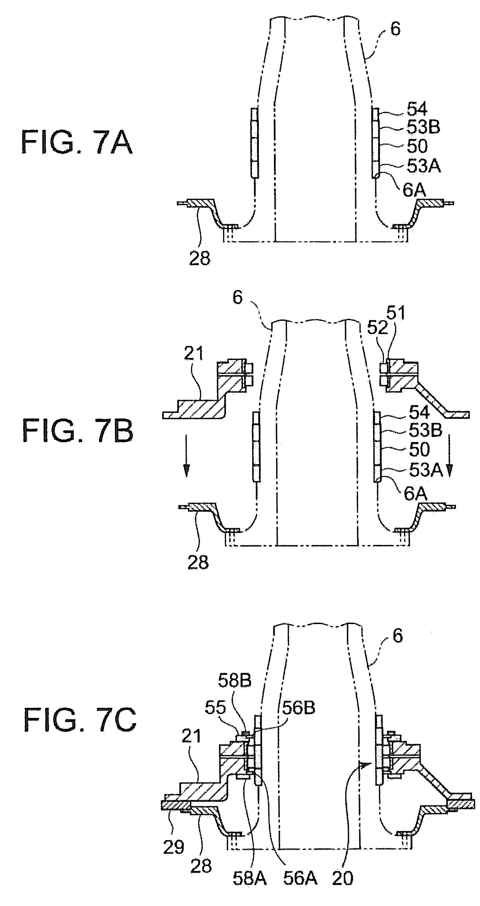

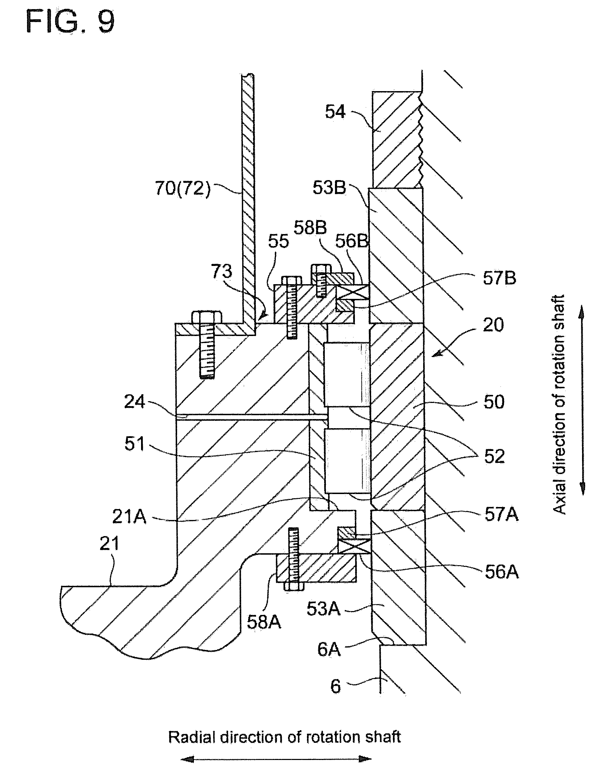

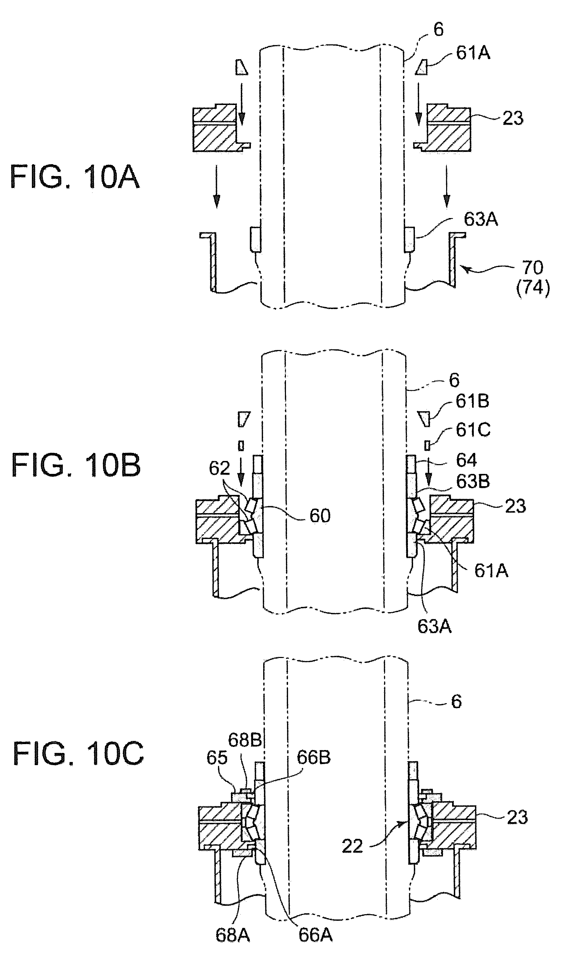

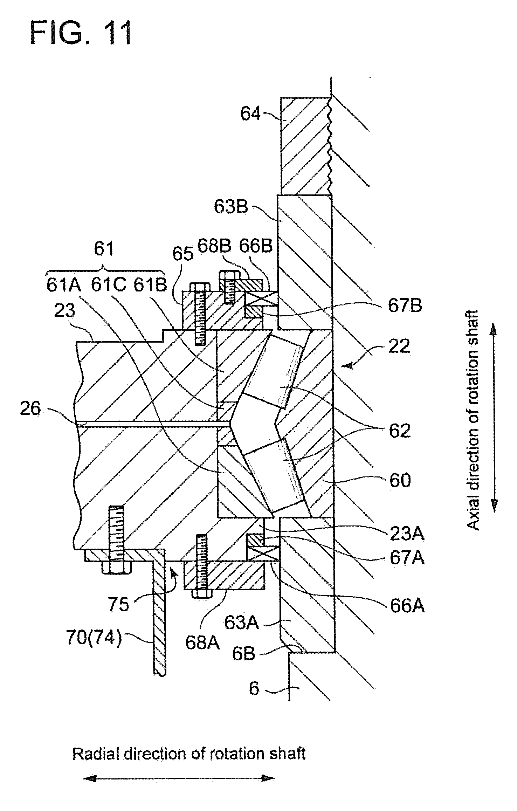

The shafting assembly method according to one embodiment will be described below in detail. Figs. 7A to 7C are illustrations of the steps of mounting the first bearing to the rotation shaft according to one embodiment. Figs. 8A to 8C are illustrations of the steps of fixing the spacer to the first bearing according to one embodiment. Fig. 9 is an illustration of a socket-and-spigot joint between the spacer and the first bearing. Figs. 10A to 10C are illustrations of the steps of mounting the second bearing to the rotation shaft according to one embodiment. Fig. 11 is an illustration of a socket-and-spigot joint between the spacer and the second bearing.

First, as shown in Fig. 7A, in the state where the rotation shaft 6 is stood upright, the inner race 50 of the first bearing 20 is fit onto the outer circumference of the rotation shaft 6. In some embodiment, the first inner race fixing ring 53A, the inner race 50, and the second inner race fixing ring 53B are fit around the rotation shaft 6 in this order, and then the fixing nut 54 is screwed to a male thread formed on the outer circumferential surface of the rotation shaft 6.

Specifically, firstly, the first inner race fixing ring 53A is fit onto the outer circumference of the rotation shaft 6 so as to contact the first stepped portion 6A provided for the outer circumferential surface of the rotation shaft 6. After this, the inner race 50 is fit onto the outer circumference of the rotation shaft 6 so as to contact the inner race fixing ring 53A. Then, the second inner race fixing ring 53B is fit onto the outer circumference of the rotation shaft 6 so as to contact the inner race 50 from the opposite side of the first inner race fixing ring 53A across the inner race 50. Finally, the fixing nut 54 is screwed to a male thread of the rotation shaft 6 so as to contact the second inner race fixing ring 53B from the opposite side of the inner race 50 across the second inner race fixing ring 53B. Herein, each of the inner race 50, the inner race fixing rings (53A, 53B) and the fixing nut 54 is moved to the respective attachment position by being lowered from the upper end toward the lower end of the rotation shaft 6 which is in the state of standing upright.

Next, as shown in Fig. 7B, a first bearing component assembly where the outer race 51 and the roller 52 are attached to the bearing housing 21 of the first bearing 20 is moved to the mounting position of the first bearing 20 to the rotation shaft 6 (the first mounting position) by being lowered along the rotation shaft 6 standing upright.

Then, as shown in Fig. 7C, the first bearing component assembly of the first bearing 20 (an assembly composed of the bearing housing 21, the outer race 51 and the roller 52) is held at the first mounting position by being supported from below. At the first mounting position, the outer race 51 of the first bearing component assembly is facing the inner race 50 fit onto the outer circumference of the rotation shaft 6. In some embodiment, in the state where the first bearing component assembly is held at the first mounting position, the outer race fixing plate 55, the seal ring (56A, 56B), the spacer ring (57A, 57B) and the seal fixing plate (58A, 58B) are attached to the first bearing component assembly. Accordingly, the mounting of the first bearing 20 to the rotation shaft 6 is completed.

As the first bearing 20 is a thrust free bearing, the first bearing 20 is continuously held at the first mounting position by being supported from below until the mounting of the second bearing 22 to the rotation shaft 6 is completed and the rotation shaft 6 is returned to the substantially horizontal position.

Also, in some embodiment, as shown in Fig. 7C, upon holding the first bearing component assembly at the first mounting position, the bearing housing 21 is supported from below via a brake disc 28. Herein, the holding position where the first bearing component assembly is held may be adjusted by inserting an annular plate 29 between the brake disc 28 and the bearing housing 21, the annular plate 29 having a thickness which has been adjusted in advance.

Next, the lower end of the spacer 70 is fixed to the first bearing 20 which is mounted to the rotation shaft 6 so that the spacer 70 extends upward from the first bearing 20.

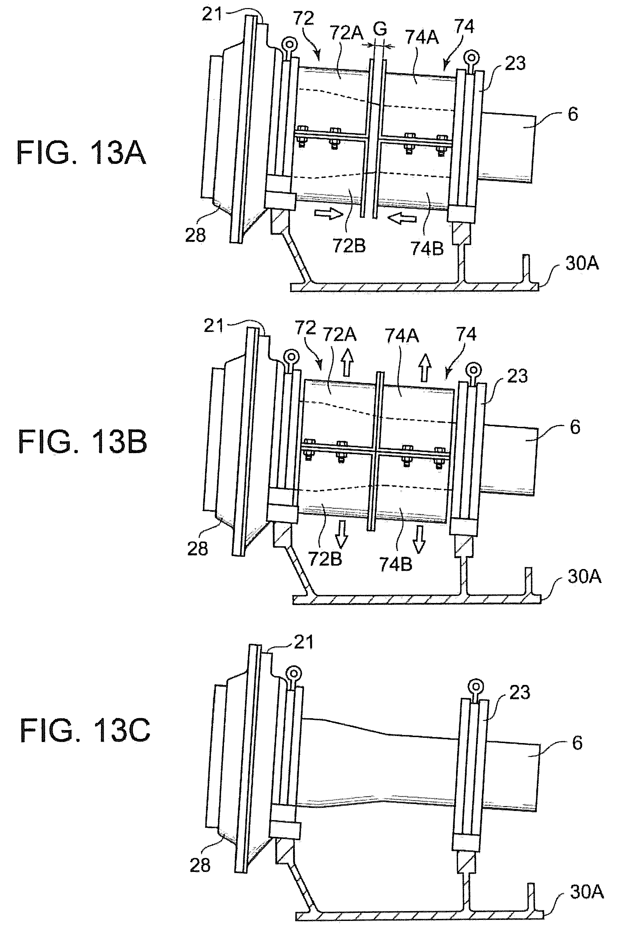

In some embodiment, as shown in Fig. 8C, the spacer 70 includes a first cylinder 72 positioned on the first bearing 20 side, a second cylinder 74 positioned on the second bearing 22 side, and an annular member 76 provided between the first cylinder 72 and the second cylinder 74. In this case, as shown in Figs. 8A to 8C, the first cylinder 72 is attached to the bearing housing 21 of the first bearing 20 held at the first mounting position by being supported from below, and then the annular member 76 and the second cylinder 74 are connected to the first cylinder 72. Herein, the spacer 70 is composed of the first cylinder 72, the second cylinder 74 and the annular member 76 for the purpose of easily performing removal of the spacer 70, as described below in reference to Figs. 13A to 13C.

In one embodiment, as shown in Fig. 9, upon fixing the lower end of the spacer 70 (the first cylinder 72) to the first bearing 20, the lower end of the spacer 70 (the first cylinder 72) and the bearing housing 21 of the first bearing 20 are fit together at a socket-and-spigot joint 73. That is, a circular projection or recess formed on the lower end of the spacer 70 (the first cylinder 72) is fit into a circular recess or projection formed on the bearing housing 21. As a result, the position of the first bearing 20 is determined with respect to the spacer 70 in the radial direction of the rotation shaft 6.

Subsequently, as shown in Fig. 10A, in the state where the rotation shaft 6 is stood upright, the bearing housing 23 of the second bearing 22 is moved downward along the rotation shaft 6 and fixed to the upper end of the spacer 70 (the second cylinder 74). As a result, the mounting position of the bearing housing 23 of the second bearing 22 to the rotation shaft 6 in the axial direction is determined at the second mounting position. That is, the length of the spacer 70 is set so that the mounting position of the second bearing 22 to the rotation shaft 6 in the axial direction is determined at the second mounting position. Accordingly, the second bearing 22 is mounted to the rotation shaft 6 at the second mounting position which is away from the first mounting position where the first bearing 20 is held by a distance corresponding to the length of the spacer 70.

Among the inner race fixing rings (63A, 63B), the third inner race fixing ring 63A positioned at the hub 4 side is fit in advance onto the outer circumference of the rotation shaft 6 so as to contact the stepped portion 6B provided on the outer circumferential surface of the rotation shaft 6. Also, among the pair of annular pieces (61A, 61B), a first piece 61A positioned at the first bearing 20 side is fit onto the inner circumference of the bearing housing 23.

In one embodiment, as shown in Fig. 11, upon fixing the bearing housing 23 of the second bearing 22 to the upper end of the spacer 70 (the second cylinder 74), the upper end of the spacer 70 (the second cylinder 74) and the bearing housing 23 of the first bearing 22 are fit together at a socket-and-spigot joint 75. That is, a circular projection or recess formed on the upper end of the spacer 70 (the second cylinder 74) is fit into a circular recess or projection formed on the bearing housing 23. As a result, the position of the second bearing 22 is determined with respect to the spacer 70 in the radial direction of the rotation shaft 6.

As described above, by determining the position of each of the first bearing 20 and the second bearing 22 in the radial direction with respect to the spacer 70 by the socket-and-spigot joint (73, 75) with the spacer 70, it is possible to perform alignment of the first bearing 20 and the second bearing 22.

Further, as shown in Fig. 10B, a second bearing component assembly composed of the inner race 60 and the roller 62 is fit onto the outer circumference of the rotation shaft 6 at the second mounting position, and the intermediate piece 61C is fit onto the bearing housing 23. After this, among the annular pieces (61A, 61B), a second piece 61B positioned at the farther side from the first bearing 20 is fit onto the bearing housing 23. As a result, a bearing 22 can be obtained where the roller 62 is provided between the inner race 60 and the outer race 61.

Also, for restricting the position of the inner race 60 in the axial direction, the fourth inner race fixing rig 63B positioned on the side farther from the hub 4 among the inner race fixing rings (63A, 63B) is fit onto the outer circumference of the rotation shaft 6, and the fixing nut 64 is screwed to a male thread formed on the outer circumferential surface of the rotation shaft 6.

Then, the outer race fixing plate 65, the seal ring (66A, 66B), the spacer ring (67A, 67B), and the seal fixing plate (68A, 68B) are attached to the bearing housing 23.

Accordingly, as shown in Fig. 10C, the mounting of the second bearing 22 to the rotation shaft 6 at the second mounting position is completed. After this, the rotation shaft 6 to which the first bearing 20 and the second bearing 22 are mounted is returned to the substantially horizontal position. Herein, as the second bearing 22 is designed to receive the thrust load, it is not necessary to support the first bearing 20 from below after the second bearing 22 is mounted to the rotation shaft 6.

Next, the method of installing the rotation shaft 6 to the nacelle 30 after having attached the first bearing 20 and the second bearing 22 to the rotation shaft 6 will be described.

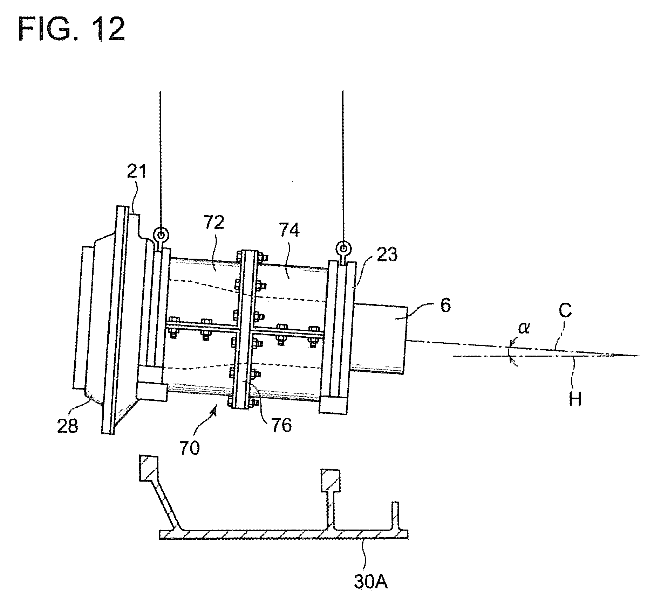

Fig. 12 is an illustration of installation of the rotation shaft to the nacelle, where the first bearing and the second bearing are mounted to the rotation shaft. Figs. 13A to 13C are illustrations of the steps of removing the spacer from a pair of bearing housings.

In some embodiment, along with the first bearing and the second bearing ("the first bearing" and "the second bearing" herein do not only represent the first bearing 20 and the second bearing 22 but also the bearing units as a whole including the bearing housings 21, 23) connected to each other by the spacer 70, the rotation shaft 6 is mounted onto the nacelle base plate 30A. At this time, as shown in Fig. 12, in the state where the bearing housings 21, 23 are connected to each other by the spacer 70, the rotation shaft 6 is lifted up by a lift along with the first bearing and the second bearing, and moved to above the nacelle base plate 30A. Then, the bearing housings 21, 23 are fixed to the nacelle base plate 30A.

Upon lifting the rotation shaft 6 up using a lift, an angle corresponding to a tilt angle "α" is formed between the center line C of the rotation shaft 6 and the horizontal line H. Thus, the component force in the axial direction of the rotation shaft 6 corresponding to the tilt angle "α" acts on the first bearing (thrust free bearing) 20, which raises the possibility that the first bearing 20 moves or get damaged. In this regard, by lifting up the rotation shaft 6 in a state where the first bearing 20 and the second bearing 22 are connected to each other by the spacer 70 as described above, it is possible to prevent misalignment of or damage to the first bearing 20.

In one embodiment, as shown in Figs. 13A to 13C, after mounting the rotation shaft 6 to the nacelle base plate 30A, the spacer 70 which has been connecting the bearing housing 21 of the first bearing 20 and the bearing housing 23 of the second bearing 22 is removed.

Specifically, as shown in Fig. 13A, an annular member 76 provided between the first cylinder 72 and the second cylinder 74 is removed and then the first cylinder 72 and the second cylinder 74 are moved along the rotation shaft 6 in the directions (see the arrows in the drawing) away from the first bearing 20 and the second bearing 22, respectively. As a result, the socket-and-spigot joint 73 (see Fig. 9) between the first cylinder 72 and the bearing housing 21 and the socket-and-spigot joint 75 (see Fig. 11) between the second cylinder 74 and the bearing housing 23 are disconnected. After this, as shown in Fig. 13B, a pair of half shells 72A, 72B forming the first cylinder 72 is separated from each other, and a pair of half shells 74A, 74B forming the second cylinder 74 is separated from each other. As a result, as shown in Fig. 13C, the rotation shaft 6 which has been covered by the spacer 70 is exposed.

Herein, the space G (which corresponds to the thickness of the annular member 76) formed between the first cylinder 72 and the second cylinder 74 by removing the annular member 76 is set to be large enough to disconnect the socket- and-spigot joint 73, 75.

In another embodiment, the spacer 70 remains after the rotation shaft 6 is mounted to the nacelle base plate 30A, serving as a connection member of the first bearing 20 and the second bearing 22 during operation of the wind turbine generator 1. In this case, instead of the configuration including the first cylinder 72, the second cylinder 74 and the annular member 76, the connection member 40 shown in Figs. 3 and 4 may be used as the spacer 70.

As described above, according to the above embodiment, as the first bearing 20 and the second bearing 22 are mounted in the state where the rotation shaft 6 is standing upright, it is possible to perform the bearing mounting work efficiently even with the rotation shaft 6 of a large diameter. Also, upon mounting the first bearing (thrust free bearing) 20 to the erect rotation shaft 6, by holding the first bearing 20 at the first mounting position by supporting from below, it is possible to accurately perform mounting of the first bearing 20 to the rotation shaft 6. Moreover, as the second bearing 22 is fixed to the upper end of the spacer 70 whose lower end is fixed to the first bearing 20 held at the first mounting position and then the second bearing 22 is mounted to the rotation shaft 6 at the second mounting position, the relative position of the second bearing 22 with respect to the first bearing 20 is accurately determined.

Embodiments of the present invention were described in detail above, but the present invention is not limited thereto, and various amendments and modifications may be implemented within a scope of the present invention.

For instance, while the bearing housing 21 of the first bearing 20 and the bearing housing 23 of the second bearing 22 are connected by the connection member 40, the bearings 21, 23 may be connected by a connection frame instead of the connection member 40, or in addition to the connection member 40.

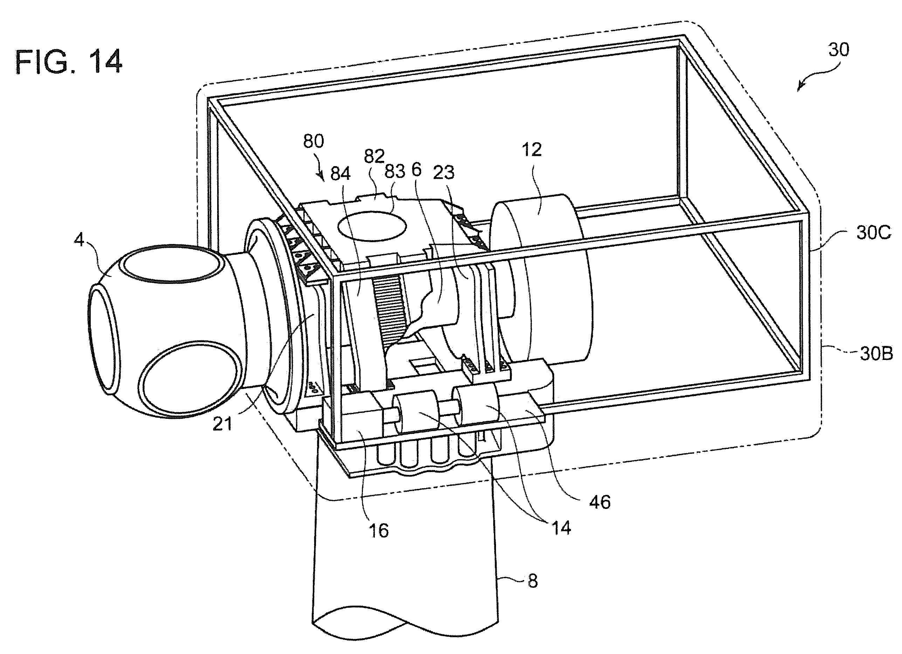

Fig. 14 is an oblique perspective view of an interior structure of a nacelle of a wind turbine generator including a connection frame provided between a pair of bearing housings 21, 23. As shown in the drawing, the connection frame 80 may include: a connection plate 82 which is provided above the rotation shaft 6 to connect the upper parts of the bearing housings 21, 23 with each other and has an attachment part 83 for a component lifting mechanism such as a crane; and a pair of supporting parts 84 which supports the connection plate 82 to the nacelle base plate 30A at both sides of the rotation shaft 6. As a result, it is possible not only to contribute to maintaining the bearings 20, 22 concentric by connecting the upper parts of bearing housings 21, 23 with each other by the connection plate 82, but also to support the load of the component lifting mechanism by the supporting parts 84 in a case where the component lifting mechanism is attached to the attachment part 83 provided for the connection plate 82.

The attachment part 83 may be configured so that a jib of a crane being the component lifting mechanism is fixable to the attachment part 83 using an arbitrary fastening member. Also, as shown in Fig. 14, the supporting parts 84 may be configured to serve as stairs for workers to climb up and down.

### REFERENCE SIGNS LIST

- 1: Wind turbine generator
- 2: Blade
- 3: Rotor
- 4: Hub
- 5: Hub cover
- 6: Rotation shaft
- 6A: First stepped portion
- 6B: Second stepped portion
- 8: Tower
- 10: Drive train
- 12: Hydraulic pump
- 13: High pressure oil line
- 14: Hydraulic motor
- 15: Low pressure oil line
- 16: Generator
- 20: First bearing
- 21: Bearing housing
- 22: Second bearing
- 23: Bearing housing
- 24: Inner flow path
- 26: Inner flow path
- 27: Brake caliper
- 28: Brake disc
- 30: Nacelle
- 30A: Nacelle base plate
- 30B: Nacelle cover
- 30C: Nacelle frame
- 40: Connection member
- 42: Cutout
- 46: Equipment placement table
- 50: Inner race
- 51: Outer race
- 52: Roller
- 53A: First inner race fixing ring
- 53B: Second inner race fixing ring
- 54: Fixing nut
- 55: Outer race fixing plate
- 56A, 56B: Seal ring
- 57A, 57B: Spacer ring
- 58A, 58B: Seal fixing plate
- 60: Inner race
- 61: Outer race
- 62: Roller
- 63A: Third inner race fixing ring
- 63B: Fourth inner race fixing ring
- 64: Fixing ring
- 65: Outer race fixing plate
- 66A, 66B: Seal ring
- 67A, 67B: Spacer ring
- 68A, 68B: Seal fixing ring
- 70: Spacer
- 72: First cylinder
- 73: Socket-and-spigot joint
- 74: Second cylinder
- 75: Socket-and-spigot joint
- 76: Annular member
- 80: Connection frame
- 82: Connection plate
- 84: Supporting part

## Claims

1. An assembly method for a shafting of a power generating apparatus of a renewable energy type, the power generating apparatus of a renewable energy type including:
at least one blade (2);
a hub (4) to which the at least one blade (2) is attached;
a rotation shaft (6) coupled to the hub (4); and
a first bearing (20) and a second bearing (22) which support the rotation shaft (6), the method comprising:
a step of placing the rotation shaft (6) to stand upright along a vertical direction;
a step of moving the first bearing (20) relative to the rotation shaft (6) to a first mounting position so that the rotation shaft (6) standing upright is inserted into the first bearing (20) which is a thrust free bearing;
a step of holding the first bearing (20) at the first mounting position by supporting the first bearing (20) from below;
a step of mounting the first bearing (20) to the rotation shaft (6) in a state where the first bearing (20) is held at the first mounting position;
a step of fixing a lower end of a spacer (70) to the first bearing (20) so that the spacer (70) extends upward from the first bearing (20) in a state where the first bearing (20) is held at the first mounting position;
a step of moving the second bearing (22) relative to the rotation shaft (6) to a second mounting position so that the rotation shaft (6) standing upright is inserted into the second bearing (22) and the second bearing (22) contacts an upper end of the spacer (70);
a step of fixing the second bearing (22) to the upper end of the spacer (70); and
a step of mounting the second bearing (22) to the rotation shaft (6) in a state where the second bearing (22) is fixed to the upper end of the spacer (70).

2. The assembly method for a shafting of a power generating apparatus of a renewable energy type according to claim 1,
wherein a brake disc (28) is attached to a lower end part of the rotation shaft (6) standing upright, a brake pad being forced against the brake disc (28) by a brake caliper which is fixed to a bearing housing (21) of the first bearing (20) ; and
wherein, in the step of holding the first bearing (20), the bearing housing (21) of the first bearing (20) is supported from below via the brake disc (28).

3. The assembly method for a shafting of a power generating apparatus of a renewable energy type according to claim 1,
wherein, in the step of fixing the lower end of the spacer (70) to the first bearing (20), the first bearing (20) is positioned with respect to the spacer (70) in a radial direction of the rotation shaft (6) by a socket-and-spigot joint (75); and
wherein, in the step of fixing the second bearing (22) to the upper end of the spacer (70), the second bearing (22) is positioned with respect to the spacer (70) in the radial direction of the rotation shaft (6) by a socket-and-spigot joint (73, 75).

4. The assembly method for a shafting of a power generating apparatus of a renewable energy type according to claim 3,
wherein the spacer (70) includes a first cylinder (72) disposed at a first bearing (20) side, a second cylinder (74) disposed at a second bearing (22) side, and an annular member provided between the first cylinder (72) and the second cylinder (74),
the method further comprising:
a step of mounting the rotation shaft (6) to a nacelle (30)of the power generating apparatus of a renewable energy type together with the first bearing (20) and the second bearing (22) which are connected by the spacer (70); and
after the step of mounting the rotation shaft (6), a step of removing the spacer (70) from the first bearing (20) and the second bearing (22) by: removing the annular member from the first cylinder (72) and the second cylinder (74); moving the first cylinder (72) and the second cylinder (74) in directions away from the first bearing (20) and the second bearing (22) along the rotation shaft (6), respectively; and then disconnecting the socket-and-spigot joint (73, 75) between the first cylinder (72) and the first bearing (20) and between the second cylinder (74) and the second bearing (22).

5. The assembly method for a shafting of a power generating apparatus of a renewable energy type according to claim 4,
wherein each of the first cylinder (72) and the second cylinder (74) includes a pair of half shells, and
wherein, in the step of removing the spacer (70), the pair of half shells of each of the first cylinder (72) and the second cylinder (74) is separated from each other in a state where the socket-and-spigot joint (73, 75) of each of the first cylinder (72) and the second cylinder (74) has been disconnected.

6. The assembly method for a shafting of a power generating apparatus of a renewable energy type according to claim 1,
wherein, in the step of mounting the first bearing (20) to the rotation shaft (6), an inner race (60) of the first bearing (20) is fit onto an outer circumferential surface of the rotation shaft (6) at the first mounting position, and
wherein, in the step of holding the first bearing (20), a first bearing (20) component assembly where an outer race (61) and a roller (52, 62) are attached to a bearing housing (21) of the first bearing (20) is supported from below and the first bearing (20) component assembly is held around the inner race (60) at the first mounting position.

7. The assembly method for a shafting of a power generating apparatus of a renewable energy type according to claim 6,
wherein a first stepped portion (6A) is provided at the first mounting position of the rotation shaft (6), and
wherein, in the step of mounting the first bearing (20) to the rotation shaft (6), a first inner race fixing ring (53A)is fit onto the outer circumferential surface of the rotation shaft (6) so as to contact the first stepped portion (6A), the inner race (60) is fit onto the outer circumferential surface of the rotation shaft (6) so as to contact the first inner race fixing ring (53A), a second inner race fixing ring (53B) is fit onto the outer circumferential surface of the rotation shaft (6) so as to contact the inner race (60) from an opposite side of the first inner race fixing ring (53A)across the inner race (60), and then a fixing nut (54) is screwed to a thread formed on the outer circumferential surface of the rotation shaft (6) so as to contact the second inner race fixing ring (53B) from an opposite side of the inner race (60) across the second inner race fixing ring (53B).

8. The assembly method for a shafting of a power generating apparatus of a renewable energy type according to claim 7,
wherein, in the step of mounting the first bearing (20) to the rotation shaft (6), a first seal ring is disposed around the first inner race fixing ring (53A) and attached to the bearing housing (21) of the first bearing (20), while a second seal ring is disposed around the second inner race fixing ring (53B) and attached to the bearing housing (21) of the first bearing (20).

9. The assembly method for a shafting of a power generating apparatus of a renewable energy type according to claim 1,
wherein the second bearing (22) is a taper roller bearing which includes an inner race (60), a roller (52, 62), an outer race (61) formed of at least one pair of annular pieces, and a bearing housing,
wherein, in the step of fixing the second bearing (22) to the upper end of the spacer (70), the bearing housing (23) of the second bearing (22) is fixed to the upper end of the spacer (70), and
wherein, in the step of mounting the second bearing (22) to the rotation shaft (6), a first piece positioned on a first bearing (20) side among the at least one pair of annular pieces of the outer race (61) is attached to the bearing housing, a second bearing (22) component assembly formed of the roller (52, 62) and the inner race (60) is fit onto an outer circumferential surface of the rotation shaft (6) at the second mounting position, and a second piece positioned on a side further from the first bearing (20) among the at least one pair of annular pieces of the outer race (61) is attached to the bearing housing.

10. The assembly method for a shafting of a power generating apparatus of a renewable energy type according to claim 9,
wherein a second stepped portion (6B) is provided at the second mounting position of the rotation shaft (6), and
wherein, in the step of mounting the second bearing (22) to the rotation shaft (6), a third inner race fixing ring (63A) is fit onto the outer circumferential surface of the rotation shaft (6) so as to contact the second stepped portion (6B), the second bearing (22) component assembly is fit onto the outer circumferential surface of the rotation shaft (6) so that the inner race (60) contacts the third inner race fixing ring, a fourth inner race fixing ring (63B) is fit onto the outer circumferential surface of the rotation shaft (6) so as to contact the inner race from an opposite side of the third inner race fixing ring (63A) across the second bearing (22) component assembly, and a fixing nut (54) is screwed to a thread formed on the outer circumferential surface of the rotation shaft (6) so as to contact the fourth inner race fixing ring (63B) from an opposite side of the second bearing (22) component assembly across the fourth inner race fixing ring.

11. The assembly method for a shafting of a power generating apparatus of a renewable energy type according to claim 10,
wherein, in the step of mounting the second bearing (22) to the rotation shaft (6), a third seal ring is disposed around the third inner race fixing ring (63A) and attached to the bearing housing (23) of the second bearing (22), while a fourth seal ring is disposed around the fourth inner race fixing ring (63B) and attached to the bearing housing (23) of the second bearing (22).

12. The assembly method for a shafting of a power generating apparatus of a renewable energy type according to claim 1,
wherein, the spacer (70) remains after mounting the rotation shaft (6) to a nacelle (30) of the power generating apparatus of a renewable energy type, the spacer (70) serving as a connection member between the first bearing (20) and the second bearing (22) while the power generating apparatus of a renewable energy type is operated.

13. The assembly method for a shafting of a power generating apparatus of a renewable energy type according to claim 12,
wherein the spacer (70) has a cylindrical shape which surrounds the rotation shaft (6) mounted on the nacelle (30) and a pair of cutouts is formed on the spacer (70) at both sides of the rotation shaft (6), respectively.

14. The assembly method for a shafting of a power generating apparatus of a renewable energy type according to claim 1, further comprising:
a step of lifting the rotation shaft (6) together with the first bearing (20) and the second bearing (22) by a lift and mounting the rotation shaft (6) to a nacelle (30) of the power generating apparatus of a renewable energy type in a state where the first bearing (20) and the second bearing (22) are connected with each other by the spacer (70).

15. The assembly method for a shafting of a power generating apparatus of a renewable energy type according to claim 13, further comprising:
after the step of mounting the rotation shaft (6) to the nacelle, a step of connecting an upper part of the bearing housing (21) of the first bearing (20) and an upper part of the bearing housing (23) of the second bearing (22) by a connection frame.

16. The assembly method for a shafting of a power generating apparatus of a renewable energy type according to claim 1,
wherein, in the bearing housing of each of the first bearing (20) and the second bearing (22), an inner flow path is formed for supplying a lubricant oil to a rolling surface or a sliding surface of said each of the first bearing (20) and the second bearing (22).

17. A shafting assembly jig for performing the assemby method for a shafting of a power generating apparatus of a renewable energy type according to one of claims 1-16, the power generating apparatus including at least one blade (2), a hub (4) to which the at least one blade (2) is attached, a rotation shaft (6) coupled to the hub (4), and a first bearing (20) and a second bearing (22) which support the rotation shaft (6), the shafting assembly jig being provided for mounting the first bearing (20) and the second bearing (22) to the rotation shaft (6) while the first bearing (20) which is a thrust free bearing is supported from below in a state where the rotation shaft (6) is placed standing upright in a vertical direction, the shafting assembly jig comprising:
a lower end configured to be fixed to the first bearing (20) which is held at the first mounting position by being supported from below around the rotation shaft (6) standing upright, and
an upper end to which the second bearing (22) is fixable at the second mounting position at an opposite side of the first bearing (20) across the shafting assembly jig, in a state where the first bearing (20) is held at the first mounting position.

18. A shafting assembly jig for a power generating apparatus of a renewable energy type according to claim 17, wherein the first bearing (20) is positioned with respect to the shafting assembly jig in a radial direction of the rotation shaft (6) by a socket-and-spigot joint (73, 75) between the lower end and the first bearing (20), and wherein the second bearing (22) is positioned with respect to the shafting assembly jig in the radial direction of the rotation shaft (6) by a socket-and-spigot joint (73, 75) between the upper end and the second bearing (22).

19. A shafting assembly jig for a power generating apparatus of a renewable energy type according to claim 18, further comprising:
a first cylinder (72) which is positioned on a first bearing (20) side and forms the lower end;
a second cylinder (74) which is positioned on a second bearing (22) side and forms the upper end; and
an annular member provided removably between the first cylinder (72) and the second cylinder (74).

20. An assembly jig for a shafting of a power generating apparatus of a renewable energy type according to claim 19,
wherein each of the first cylinder (72) and the second cylinder (74) includes a pair of half shells which can be divided.

## Patentansprüche

1. Montageverfahren für einen Wellenstrang einer Stromerzeugungsvorrichtung vom Typ erneuerbare Energie, wobei die Stromerzeugungsvorrichtung vom Typ erneuerbare Energie umfasst:
mindestens ein Rotorblatt (2),
eine Nabe (4), an der das mindestens eine Rotorblatt (2) befestigt ist,
eine Drehwelle (6), die mit der Nabe (4) gekoppelt ist, und
ein erstes Lager (20) und ein zweites Lager (22), welche die Drehwelle (6) lagern, wobei das Verfahren umfasst:
einen Schritt des Anordnens der Drehwelle (6) derart, dass sie entlang einer senkrechten Richtung aufrecht steht,
einen Schritt des Bewegens des ersten Lagers (20) relativ zu der Drehwelle (6) zu einer ersten Montageposition derart, dass die aufrecht stehende Drehwelle (6) in das erste Lager (20) eingeführt wird, welches ein axialdruckfreies Lager ist,
einen Schritt des Haltens des ersten Lagers (20) an der ersten Montageposition durch Abstützen des ersten Lagers (20) von unten,
einen Schritt des Anbringens des ersten Lagers (20) an der Drehwelle (6) in einem Zustand, in dem das erste Lager (20) an der ersten Montageposition gehalten wird,
einen Schritt des Befestigens eines unteren Endes eines Distanzstücks (70) an dem ersten Lager (20) derart, dass sich das Distanzstück (70) von dem ersten Lager (20) aufwärts erstreckt, in einem Zustand, in dem das erste Lager (20) an der ersten Montageposition gehalten wird,
einen Schritt des Bewegens des zweiten Lagers (22) relativ zu der Drehwelle (6) zu einer zweiten Montageposition derart, dass die aufrecht stehende Drehwelle (6) in das zweite Lager (22) eingeführt wird und das zweite Lager (22) ein oberes Ende des Distanzstücks (70) berührt,
einen Schritt des Befestigens des zweiten Lagers (22) an dem oberen Ende des Distanzstücks (70), und
einen Schritt des Anbringens des zweiten Lagers (22) an der Drehwelle (6) in einem Zustand, in dem das zweite Lager (22) an dem oberen Ende des Distanzstücks (70) befestigt ist.

2. Montageverfahren für einen Wellenstrang einer Stromerzeugungsvorrichtung vom Typ erneuerbare Energie nach Anspruch 1,
wobei eine Bremsscheibe (28) an einem unteren Endteil der aufrecht stehenden Drehwelle (6) befestigt wird, ein Bremsbelag durch eine Bremszange, die an einem Lagergehäuse (21) des ersten Lagers (20) befestigt ist, an die Bremsscheibe (28) gedrückt wird, und
wobei bei dem Schritt des Haltens des ersten Lagers (20) das Lagergehäuse (21) des ersten Lagers (20) über die Bremsscheibe (28) von unten her abgestützt wird.

3. Montageverfahren für einen Wellenstrang einer Stromerzeugungsvorrichtung vom Typ erneuerbare Energie nach Anspruch 1,
wobei bei dem Schritt des Befestigens des unteren Endes des Distanzstücks (70) an dem ersten Lager (20) das erste Lager (20) durch eine Steckmuffenverbindung (75) in Bezug auf das Distanzstück (70) in einer radialen Richtung der Drehwelle (6) positioniert wird, und
wobei bei dem Schritt des Befestigens des zweiten Lagers (22) an dem oberen Ende des Distanzstücks (70) das zweite Lager (22) durch eine Steckmuffenverbindung (73, 75) in Bezug auf das Distanzstück (70) in der radialen Richtung der Drehwelle (6) positioniert wird.

4. Montageverfahren für einen Wellenstrang einer Stromerzeugungsvorrichtung vom Typ erneuerbare Energie nach Anspruch 3,
wobei das Distanzstück (70) einen ersten Zylinder (72), der auf einer Seite des ersten Lagers (20) angeordnet ist, einen zweiten Zylinder (74), der auf einer Seite des zweiten Lagers (22) angeordnet ist, und ein ringförmiges Glied, das zwischen dem ersten Zylinder (72) und den zweiten Zylinder (74) vorgesehen ist, umfasst,
wobei das Verfahren ferner umfasst:
einen Schritt des Anbringens der Drehwelle (6) an einer Gondel (30) der Stromerzeugungsvorrichtung vom Typ erneuerbare Energie gemeinsam mit dem ersten Lager (20) und dem zweiten Lager (22), die durch das Distanzstück (70) verbunden sind, und
nach dem Schritt des Anbringens der Drehwelle (6) einen Schritt des Entfernens des Distanzstücks (70) von dem ersten Lager (20) und dem zweiten Lager (22) durch: Entfernen des ringförmigen Glieds von dem ersten Zylinder (72) und dem zweiten Zylinder (74), Bewegen des ersten Zylinders (72) und des zweiten Zylinders (74) in Richtungen weg von dem ersten Lager (20) bzw. dem zweiten Lager (22) die Drehwelle (6) entlang, und dann Trennen der Steckmuffenverbindung (73, 75) zwischen dem ersten Zylinder (72) und dem ersten Lager (20) und zwischen dem zweiten Zylinder (74) und dem zweiten Lager (22).

5. Montageverfahren für einen Wellenstrang einer Stromerzeugungsvorrichtung vom Typ erneuerbare Energie nach Anspruch 4,
wobei sowohl der erste Zylinder (72) als auch der zweite Zylinder (74) ein Paar von Halbschalen umfasst, und
wobei bei dem Schritt des Entfernens des Distanzstücks (70) das Paar von Halbschalen sowohl des ersten Zylinders (72) als auch des zweiten Zylinders (74) in einem Zustand voneinander getrennt wird, in dem die Steckmuffenverbindung (73, 75) sowohl des ersten Zylinders (72) als auch des zweiten Zylinders (74) getrennt wurde.

6. Montageverfahren für einen Wellenstrang einer Stromerzeugungsvorrichtung vom Typ erneuerbare Energie nach Anspruch 1,
wobei bei dem Schritt des Anbringens des ersten Lagers (20) an der Drehwelle (6) ein Innenring (60) des ersten Lagers (20) auf eine Außenumfangsoberfläche der Drehwelle (6) an der ersten Montageposition aufgesteckt wird, und
wobei bei dem Schritt des Haltens des ersten Lagers (20) eine Komponentenanordnung des ersten Lagers (20), bei der ein Außenring (61) und eine Rolle (52, 62) an einem Lagergehäuse (21) des ersten Lagers (20) befestigt sind, von unten her abgestützt wird und die Komponentenanordnung des ersten Lagers (20) an der ersten Montageposition um den Innenring (60) herum gehalten wird.

7. Montageverfahren für einen Wellenstrang einer Stromerzeugungsvorrichtung vom Typ erneuerbare Energie nach Anspruch 6,
wobei der erste gestufte Abschnitt (6A) an der ersten Montageposition der Drehwelle (6) vorgesehen ist, und
wobei bei dem Schritt des Anbringens des ersten Lagers (20) an der Drehwelle (6) ein erster Innenringbefestigungsring (53A) auf die Außenumfangsoberfläche der Drehwelle (6) aufgesteckt wird, um den ersten gestuften Abschnitt (6A) zu berühren, der Innenring (60) auf die Außenumfangsoberfläche der Drehwelle (6) aufgesteckt wird, um den ersten Innenringbefestigungsring (53A) zu berühren, ein zweiter Innenringbefestigungsring (53B) auf die Außenumfangsoberfläche der Drehwelle (6) aufgesteckt wird, um den Innenring (60) von einer über den Innenring (60) dem ersten Innenringbefestigungsring (53A) entgegengesetzten Seite zu berühren, und dann eine Befestigungsmutter (54) auf ein Gewinde geschraubt wird, das an der Außenumfangsoberfläche der Drehwelle (6) ausgebildet ist, um den zweiten Innenringbefestigungsring (53B) von einer über den zweiten Innenringbefestigungsring (53B) dem Innenring (60) entgegengesetzten Seite zu berühren.

8. Montageverfahren für einen Wellenstrang einer Stromerzeugungsvorrichtung vom Typ erneuerbare Energie nach Anspruch 7,
wobei bei dem Schritt des Anbringens des ersten Lagers (20) an der Drehwelle (6) ein erster Dichtungsring um den ersten Innenringbefestigungsring (53A) herum angeordnet und an dem Lagergehäuse (21) des ersten Lagers (20) befestigt wird, während ein zweiter Dichtungsring um den zweiten Innenringbefestigungsring (53B) herum angeordnet und an dem Lagergehäuse (21) des ersten Lagers (20) befestigt wird.

9. Montageverfahren für einen Wellenstrang einer Stromerzeugungsvorrichtung vom Typ erneuerbare Energie nach Anspruch 1,
wobei das zweite Lager (22) ein Kegelrollenlager ist, das einen Innenring (60), eine Rolle (52, 62), einen Außenring (61), der aus mindestens einem Paar ringförmiger Teile gebildet ist, und ein Lagergehäuse umfasst,
wobei bei dem Schritt des Befestigens des zweiten Lagers (22) an dem oberen Ende des Distanzstücks (70) das Lagergehäuse (23) des zweiten Lagers (22) an dem oberen Ende des Distanzstücks (70) befestigt wird, und
wobei bei dem Schritt des Anbringens des zweiten Lagers (22) an der Drehwelle (6) aus dem mindestens einen Paar von ringförmigen Teilen des Außenrings (61) ein erster Teil, der auf einer Seite des ersten Lagers (20) angeordnet ist, an dem Lagergehäuse befestigt wird, eine Komponentenanordnung des zweiten Lagers (22), die aus der Rolle (52, 62) und dem Innenring (60) gebildet ist, an der zweiten Montageposition auf eine Außenumfangsoberfläche der Drehwelle (6) aufgesteckt wird und aus dem mindestens einen Paar von ringförmigen Teilen des Außenrings (61) ein zweiter Teil, der auf einer Seite angeordnet ist, die von dem ersten Lager (20) weiter entfernt ist, an dem Lagergehäuse befestigt wird.

10. Montageverfahren für einen Wellenstrang einer Stromerzeugungsvorrichtung vom Typ erneuerbare Energie nach Anspruch 9,
wobei ein zweiter gestufter Abschnitt (6B) an der zweiten Montageposition der Drehwelle (6) vorgesehen ist, und
wobei bei dem Schritt des Anbringens des zweiten Lagers (22) an der Drehwelle (6) ein dritter Innenringbefestigungsring (63A) auf die Außenumfangsoberfläche der Drehwelle (6) aufgesteckt wird, um den zweiten gestuften Abschnitt (6B) zu berühren, die Komponentenanordnung des zweiten Lagers (22) auf die Außenumfangsoberfläche der Drehwelle (6) derart aufgesteckt wird, dass der Innenring (60) den dritten Innenringbefestigungsring berührt, ein vierter Innenringbefestigungsring (63B) auf die Außenumfangsoberfläche der Drehwelle (6) aufgesteckt wird, um den Innenring von einer über die Komponentenanordnung des zweiten Lagers (22) dem dritten Innenringbefestigungsring (63A) entgegengesetzten Seite zu berühren, und eine Befestigungsmutter (54) auf ein Gewinde geschraubt wird, das an der Außenumfangsoberfläche der Drehwelle (6) ausgebildet ist, um den vierten Innenringbefestigungsring (63B) von einer über den vierten Innenringbefestigungsring der Komponentenanordnung des zweiten Lagers (22) entgegengesetzten Seite zu berühren.

11. Montageverfahren für einen Wellenstrang einer Stromerzeugungsvorrichtung vom Typ erneuerbare Energie nach Anspruch 10,
wobei bei dem Schritt des Anbringens des zweiten Lagers (22) an der Drehwelle (6) ein dritter Dichtungsring um den dritten Innenringbefestigungsring (63A) herum angeordnet und an dem Lagergehäuse (23) des zweiten Lagers (22) befestigt wird, während ein vierter Dichtungsring um den vierten Innenringbefestigungsring (63B) herum angeordnet und an dem Lagergehäuse (23) des zweiten Lagers (22) befestigt wird.

12. Montageverfahren für einen Wellenstrang einer Stromerzeugungsvorrichtung vom Typ erneuerbare Energie nach Anspruch 1,
wobei das Distanzstück (70) nach dem Anbringen der Drehwelle (6) an einer Gondel (30) der Stromerzeugungsvorrichtung vom Typ erneuerbare Energie verbleibt, wobei das Distanzstück (70) als Verbindungsglied zwischen dem ersten Lager (20) und dem zweiten Lager (22) dient, während die Stromerzeugungsvorrichtung vom Typ erneuerbare Energie betrieben wird.

13. Montageverfahren für einen Wellenstrang einer Stromerzeugungsvorrichtung vom Typ erneuerbare Energie nach Anspruch 12,
wobei das Distanzstück (70) eine zylindrische Form aufweist, welche die Drehwelle (6), die an der Gondel (30) angebracht ist, umgibt, und ein Paar von Ausschnitten an dem Distanzstück (70) jeweils auf beiden Seiten der Drehwelle (6) ausgebildet ist.

14. Montageverfahren für einen Wellenstrang einer Stromerzeugungsvorrichtung vom Typ erneuerbare Energie nach Anspruch 1, ferner umfassend:
einen Schritt des Hebens der Drehwelle (6) gemeinsam mit dem ersten Lager (20) und dem zweiten Lager (22) mittels einer Hebevorrichtung und des Anbringens der Drehwelle (6) an einer Gondel (30) der Stromerzeugungsvorrichtung vom Typ erneuerbare Energie in einem Zustand, in dem das erste Lager (20) und das zweite Lager (22) durch das Distanzstück (70) miteinander verbunden sind.

15. Montageverfahren für einen Wellenstrang einer Stromerzeugungsvorrichtung vom Typ erneuerbare Energie nach Anspruch 13, ferner umfassend:
nach dem Schritt des Anbringens der Drehwelle (6) an der Gondel einen Schritt des Verbindens eines oberen Teils des Lagergehäuses (21) des ersten Lagers (20) und eines oberen Teils des Lagergehäuses (23) des zweiten Lagers (22) durch einen Verbindungsrahmen.

16. Montageverfahren für einen Wellenstrang einer Stromerzeugungsvorrichtung vom Typ erneuerbare Energie nach Anspruch 1,
wobei in dem Lagergehäuse sowohl des ersten Lagers (20) als auch des zweiten Lagers (22) ein innerer Fließweg zum Zuführen eines Schmieröls zu einer Rolloberfläche oder einer Gleitoberfläche sowohl des ersten Lagers (20) als auch des zweiten Lagers (22) gebildet wird.

17. Wellenmontagevorrichtung zum Durchführen des Montageverfahrens für einen Wellenstrang einer Stromerzeugungsvorrichtung vom Typ erneuerbare Energie nach einem der Ansprüche 1-16, wobei die Stromerzeugungsvorrichtung mindestens ein Rotorblatt (2), eine Nabe (4), an der das mindestens eine Rotorblatt (2) befestigt ist, eine Drehwelle (6), die mit der Nabe (4) gekoppelt ist, und ein erstes Lager (20) und ein zweites Lager (22), welche die Drehwelle (6) lagern, umfasst, wobei die Wellenstrangmontagevorrichtung zum Anbringen des ersten Lagers (20) und des zweiten Lagers (22) an der Drehwelle (6) vorgesehen ist, während das erste Lager (20), das ein axialdruckfreies Lager ist, von unten her in einem Zustand abgestützt wird, in dem die Drehwelle (6) in einer senkrechten Richtung aufrecht stehend angeordnet ist, wobei die Wellenstrangmontagevorrichtung umfasst:
ein unteres Ende, das dazu ausgebildet ist, an dem ersten Lager (20) befestigt zu werden, welches an der ersten Montageposition gehalten wird, indem es von unten her um die aufrecht stehende Drehwelle (6) herum abgestützt wird, und
ein oberes Ende, an dem das zweite Lager (22) an der zweiten Montageposition auf einer dem ersten Lager (20) über die Wellenstrangmontagevorrichtung entgegengesetzten Seite in einem Zustand befestigbar ist, in dem das erste Lager (20) an der ersten Montageposition gehalten wird.

18. Wellenstrangmontagevorrichtung für eine Stromerzeugungsvorrichtung vom Typ erneuerbare Energie nach Anspruch 17,
wobei das erste Lager (20) durch eine Steckmuffenverbindung (73, 75) in Bezug auf die Wellenstrangmontagevorrichtung in einer radialen Richtung der Drehwelle (6) zwischen dem unteren Ende und dem ersten Lager (20) positioniert ist, und
wobei das zweite Lager (22) durch eine Steckmuffenverbindung (73, 75) in Bezug auf die Wellenstrangmontagevorrichtung in der radialen Richtung der Drehwelle (6) zwischen dem oberen Ende und dem zweiten Lager (22) positioniert ist.

19. Wellenstrangmontagevorrichtung für eine Stromerzeugungsvorrichtung vom Typ erneuerbare Energie nach Anspruch 18, ferner umfassend:
einen ersten Zylinder (72), der auf der Seite eines ersten Lagers (20) positioniert ist und das untere Ende bildet:
einen zweiten Zylinder (74), der auf der Seite eines zweiten Lagers (22) positioniert ist und das obere Ende bildet, und
ein ringförmiges Glied, das entfernbar zwischen dem ersten Zylinder (72) und dem zweiten Zylinder (74) vorgesehen ist.

20. Wellenstrangmontagevorrichtung für einen Wellenstrang einer Stromerzeugungsvorrichtung vom Typ erneuerbare Energie nach Anspruch 19,
wobei sowohl der erste Zylinder (72) als auch der zweite Zylinder (74) ein Paar von Halbschalen umfasst, welche geteilt werden können.

## Revendications

1. Procédé d'assemblage pour une ligne d'arbre d'un appareil de génération de puissance du type à énergie renouvelable, l'appareil de génération de puissance du type à énergie renouvelable comprenant :
au moins une pale (2) ;
un moyeu (4) sur lequel la au moins une pale (2) est fixée ;
un arbre de rotation (6) couplé au moyeu (4) ; et
un premier palier (20) et un deuxième palier (22) qui supportent l'arbre de rotation (6), le procédé comportant :
une étape de mise en place de l'arbre de rotation (6) pour se tenir droit le long d'une direction verticale ;
une étape de déplacement du premier palier (20) par rapport à l'arbre de rotation (6) jusqu'à une première position de montage de telle sorte que l'arbre de rotation (6) se tenant droit est inséré dans le premier palier (20) qui sont un palier sans poussée ;
une étape de maintien du premier palier (20) dans la première position de montage en supportant le premier palier (20) par dessous ;
une étape de montage du premier palier (20) sur l'arbre de rotation (6) dans un état où le premier palier (20) est maintenu dans la première position de montage ;
une étape de fixation d'une extrémité inférieure d'une entretoise (70) sur le premier palier (20) de telle sorte que l'entretoise (70) s'étend vers le haut depuis le premier palier (20) dans un état où le premier palier (20) est maintenu dans la première position de montage ;
une étape de déplacement du deuxième palier (22) par rapport à l'arbre de rotation (6) jusqu'à une deuxième position de montage de telle sorte que l'arbre de rotation (6) se tenant droit est inséré dans le deuxième palier (22) et le deuxième palier (22) est en contact avec une extrémité supérieure de l'entretoise (70) ;
une étape de fixation du deuxième palier (22) sur l'extrémité supérieure de l'entretoise (70) ; et
une étape de montage du deuxième palier (22) sur l'arbre de rotation (6) dans un état où le deuxième palier (22) est fixé sur l'extrémité supérieure de l'entretoise (70).

2. Procédé d'assemblage pour une ligne d'arbre d'un appareil de génération de puissance du type à énergie renouvelable selon la revendication 1,
selon lequel un disque de frein (28) est fixé sur une partie d'extrémité inférieure de l'arbre de rotation (6) se tenant droit, une garniture de frein étant forcée contre le disque de frein (28) par un étrier de frein qui est fixé sur un logement de palier (21) du premier palier (20) ; et selon lequel, dans l'étape de maintien du premier palier (20), le logement de palier (21) du premier palier (20) est supporté par dessous par l'intermédiaire du disque de frein (28).

3. Procédé d'assemblage pour une ligne d'arbre d'un appareil de génération de puissance du type à énergie renouvelable selon la revendication 1,
selon lequel, dans l'étape de fixation de l'extrémité inférieure de l'entretoise (70) sur le premier palier (20), le premier palier (20) est positionné par rapport à l'entretoise (70) dans une direction radiale de l'arbre de rotation (6) par un raccord à emboîtement (75) ; et
selon lequel, dans l'étape de fixation du deuxième palier (22) sur l'extrémité supérieure de l'entretoise (70), le deuxième palier (22) est positionné par rapport à l'entretoise (70) dans la direction radiale de l'arbre de rotation (6) par un raccord à emboîtement (73, 75).

4. Procédé d'assemblage pour une ligne d'arbre d'un appareil de génération de puissance du type à énergie renouvelable selon la revendication 3,
selon lequel l'entretoise (70) comprend un premier cylindre (72) disposé sur un côté de premier palier (20), un deuxième cylindre (74) a disposé sur un côté de deuxième palier (22), et un élément annulaire prévu entre le premier cylindre (72) et le deuxième cylindre (74),
le procédé comportant en outre :
une étape de montage de l'arbre de rotation (6) sur une nacelle (30) de l'appareil de génération de puissance du type à énergie renouvelable avec le premier palier (20) et
le deuxième palier (22) qui sont reliés par l'entretoise (70) ; et
après l'étape de montage de l'arbre de rotation (6), une étape d'enlèvement de l'entretoise (70) du premier palier (20) et du deuxième palier (22) par : enlèvement de l'élément annulaire du premier cylindre (72) et du deuxième cylindre (74) ; déplacement du premier cylindre (72) et du deuxième cylindre (74) dans des directions à l'écart du premier palier (20) et du deuxième palier (22) le long de l'arbre de rotation (6), respectivement ; et ensuite déconnexion du raccord à emboîtement (73, 75) entre le premier cylindre (72) et le premier palier (20) et entre le deuxième cylindre (74) et le deuxième palier (22).

5. Procédé d'assemblage pour une ligne d'arbre d'un appareil de génération de puissance du type à énergie renouvelable selon la revendication 4,
selon lequel chacun du premier cylindre (72) et du deuxième cylindre (74) comprend une paire de demi-coquilles, et selon lequel, dans l'étape d'enlèvement de l'entretoise (70), la paire de demi-coquilles de chacun du premier cylindre (72) et le deuxième cylindre (74) est séparée dans un état où le raccord à emboîtement (73, 75) de chacun du premier cylindre (72) et du deuxième cylindre (74) a été déconnecté.

6. Procédé d'assemblage pour une ligne d'arbre d'un appareil de génération de puissance du type à énergie renouvelable selon la revendication 1,
selon lequel, dans l'étape de montage du premier palier (20) sur l'arbre de rotation (6), une piste intérieure (60) du premier palier (20) est ajustée sur une surface circonférentielle extérieure de l'arbre de rotation (6) dans la première position de montage, et
selon lequel, dans l'étape de maintien du premier palier (20), un assemblage de composant de premier palier (20) où une piste extérieure (61) et un rouleau (52, 62) sont fixés sur un logement de palier (21) du premier palier (20) est supporté par dessous et l'assemblage de composant de premier palier (20) est maintenu autour de la piste intérieure (60) dans la première position de montage.

7. Procédé d'assemblage pour une ligne d'arbre d'un appareil de génération de puissance du type à énergie renouvelable selon la revendication 6,
selon lequel une première partie étagée (GA) est prévue dans la première position de montage de l'arbre de rotation (6), et
selon lequel, dans l'étape de montage du premier palier (20) sur l'arbre de rotation (6), un premier anneau de fixation de piste intérieure (53A) est ajusté sur la surface circonférentielle extérieure de l'arbre de rotation (6) de façon à venir en contact avec la première partie étagée (6A), la piste intérieure (60) est ajustée sur la surface circonférentielle extérieure de l'arbre de rotation (6) de façon à venir en contact avec le premier anneau de fixation de piste intérieure (53A), un deuxième anneau de fixation de piste intérieure (53B) est ajusté sur la surface circonférentielle extérieure de l'arbre de rotation (6) de façon à venir en contact avec la piste intérieure (60) depuis un côté opposé du premier anneau de fixation de piste intérieure (53A) à travers la piste intérieure (60), et un écrou de fixation (54) est alors vissé sur un filet formé sur la surface circonférentielle extérieure de l'arbre de rotation (6) de façon à venir en contact avec le deuxième anneau de fixation de piste intérieure (53B) depuis un côté opposé de la piste intérieure (60) à travers le deuxième anneau de fixation de piste intérieure (53B).

8. Procédé d'assemblage pour une ligne d'arbre d'un appareil de génération de puissance du type à énergie renouvelable selon la revendication 7,
selon lequel, dans l'étape de montage du premier palier (20) sur l'arbre de rotation (6), une première bague d'étanchéité est disposée autour du premier anneau de fixation de piste intérieure (53A) et fixée sur le logement de palier (21) du premier palier (20), alors qu'une deuxième bague d'étanchéité est disposée autour du deuxième anneau de fixation de piste intérieure (53B) et fixée sur le logement de palier (21) du premier palier (20).

9. Procédé d'assemblage pour une ligne d'arbre d'un appareil de génération de puissance du type à énergie renouvelable selon la revendication 1,
selon lequel le deuxième palier (22) est un roulement à rouleau conique qui comprend une piste intérieure (60), un rouleau (52, 62), une piste extérieure (61) composée d'au moins une paire de pièces annulaires, et un logement de palier,
selon lequel, dans l'étape de fixation du deuxième palier (22) sur l'extrémité supérieure de l'entretoise (70), le logement de palier (23) du deuxième palier (22) est fixé sur l'extrémité supérieure de l'entretoise (70), et
selon lequel, dans l'étape de montage du deuxième palier (22) sur l'arbre de rotation (6), une première pièce positionnée sur un côté de premier palier (20) parmi la au moins une paire de pièces annulaires de la piste extérieure (61) est fixée sur le logement de palier, un ensemble de composant de deuxième palier (22) composé du rouleau (52, 62) et de la piste intérieure (60) est ajusté sur une surface circonférentielle extérieure de l'arbre de rotation (6) dans la deuxième position de montage, et une deuxième pièce positionnée sur un côté éloigné du premier palier (20) parmi la au moins une paire de pièces annulaires de la piste extérieure (61) est fixée sur le logement de palier.

10. Procédé d'assemblage pour une ligne d'arbre d'un appareil de génération de puissance du type à énergie renouvelable selon la revendication 9,
selon lequel une deuxième partie étagée (6B) est prévue dans la deuxième position de montage de l'arbre de rotation (6), et
selon lequel, dans l'étape de montage du deuxième palier (22) sur l'arbre de rotation (6), un troisième anneau de fixation de piste intérieure (63A) est ajusté sur la surface circonférentielle extérieure de l'arbre de rotation (6) de façon à venir en contact avec la deuxième partie étagée (6B), l'ensemble de composant de deuxième palier (22) est ajusté sur la surface circonférentielle extérieure de l'arbre de rotation (6) de telle sorte que la piste intérieure (60) entre en contact avec le troisième anneau de fixation de piste intérieure, un quatrième anneau de fixation de piste intérieure (63B) est ajusté sur la surface circonférentielle extérieure de l'arbre de rotation (6) de façon à venir en contact avec la piste intérieure depuis un côté opposé du troisième anneau de fixation de piste intérieure (63A) à travers l'ensemble de composant de deuxième palier (22), et un écrou de fixation (54) est vissé sur un filet formé sur la surface circonférentielle extérieure de l'arbre de rotation (6) de façon à venir en contact avec le quatrième anneau de fixation de piste intérieure (63B) depuis un côté opposé de l'ensemble de composant de deuxième palier (22) à travers le quatrième anneau de fixation de piste intérieure.

11. Procédé d'assemblage pour une ligne d'arbre d'un appareil de génération de puissance du type à énergie renouvelable selon la revendication 10,
selon lequel, dans l'étape de montage du deuxième palier (22) sur l'arbre de rotation (6), une troisième bague d'étanchéité est disposée autour du troisième anneau de fixation de piste intérieure (63A) et fixée sur le logement de palier (23) du deuxième palier (22), alors qu'une quatrième bague d'étanchéité est disposée autour du quatrième anneau de fixation de piste intérieure (63B) et fixée sur le logement de palier (23) du deuxième palier (22).

12. Procédé d'assemblage pour une ligne d'arbre d'un appareil de génération de puissance du type à énergie renouvelable selon la revendication 1,
selon lequel l'entretoise (70) reste après montage de l'arbre de rotation (6) sur une nacelle (30) de l'appareil de génération de puissance du type à énergie renouvelable, l'entretoise (70) servant d'élément de connexion entre le premier palier (20) et le deuxième palier (22) tandis que l'appareil de génération de puissance du type à énergie renouvelable est mis en oeuvre.

13. Procédé d'assemblage pour une ligne d'arbre d'un appareil de génération de puissance du type à énergie renouvelable selon la revendication 12,
selon lequel l'entretoise (70) a une forme cylindrique qui entoure l'arbre de rotation (6) monté sur la nacelle (30) et une paire de découpes est formée sur l'entretoise (70) des deux côtés de l'arbre de rotation (6), respectivement.

14. Procédé d'assemblage pour une ligne d'arbre d'un appareil de génération de puissance du type à énergie renouvelable selon la revendication 1, comportant en outre :
une étape de soulèvement de l'arbre de rotation (6) avec le premier palier (20) et le deuxième palier (22) par un dispositif de levage et de montage de l'arbre de rotation (6) sur une nacelle (30) de l'appareil de génération de puissance du type à énergie renouvelable dans un état où le premier palier (20) et le deuxième palier (22) sont reliés l'un à l'autre par l'entretoise (70).

15. Procédé d'assemblage pour une ligne d'arbre d'un appareil de génération de puissance du type à énergie renouvelable selon la revendication 13, comportant en outre :
après l'étape de montage de l'arbre de rotation (6) dans la nacelle, une étape de raccordement d'une partie supérieure du logement de palier (21) du premier palier (20) et d'une partie supérieure du logement de palier (23) du deuxième palier (22) grâce à un bâti de connexion.

16. Procédé d'assemblage pour une ligne d'arbre d'un appareil de génération de puissance du type à énergie renouvelable selon la revendication 1,
selon lequel, dans le logement de palier de chacun du premier palier (20) et du deuxième palier (22), un passage d'écoulement intérieur est formé pour délivrer une huile de lubrification à une surface de roulement ou à une surface de glissement de chacun du premier palier (20) et du deuxième palier (22).

17. Gabarit d'assemblage de ligne d'arbre pour mettre en oeuvre le procédé d'assemblage pour une ligne d'arbre d'un appareil de génération de puissance du type à énergie renouvelable selon l'une des revendications 1 à 16, l'appareil de génération de puissance du type à énergie renouvelable comprenant au moins une pale (2), un moyeu (4) sur lequel la au moins une pale (2) est fixée, un arbre de rotation (6) couplé au moyeu (4), et un premier palier (20) et un deuxième palier (22) qui supportent l'arbre de rotation (6), le gabarit d'assemblage étant prévu pour monter le premier palier (20) et le deuxième palier (22) sur l'arbre de rotation (6) tandis que le premier palier (20) qui est un palier sans poussée est supporté par dessous dans un état où l'arbre de rotation (6) est placé en se tenant debout dans une direction verticale, le gabarit d'assemblage comportant :
une extrémité inférieure configurée pour être fixée sur le premier palier (20) qui est maintenu dans la première position de montage en étant supporté par dessous autour de l'arbre de rotation (6) qui se tient droit, et
une extrémité supérieure sur laquelle le deuxième palier (22) peut être fixé dans la deuxième position de montage sur un côté opposé du premier palier (20) à travers le gabarit d'assemblage de ligne d'arbre, dans un état où le premier palier (20) est maintenu dans la première position de montage.

18. Gabarit d'assemblage de ligne d'arbre pour un appareil de génération de puissance du type à énergie renouvelable selon la revendication 17,
dans lequel le premier palier (20) est positionné par rapport au gabarit d'assemblage de ligne d'arbre dans une direction radiale de l'arbre de rotation (6) par un raccord à emboîtement (73, 75) entre l'extrémité inférieure et le premier palier (20), et
dans lequel le deuxième palier (22) est positionné par rapport au gabarit d'assemblage de ligne d'arbre dans la direction radiale de l'arbre de rotation (6) par un raccord à emboîtement (73, 75) entre l'extrémité supérieure et le deuxième palier (22).

19. Gabarit d'assemblage de ligne d'arbre pour un appareil de génération de puissance du type à énergie renouvelable selon la revendication 18, comportant en outre :
un premier cylindre (72) qui est positionné sur un côté de premier palier (20) et forme l'extrémité inférieure ;
un deuxième cylindre (74) qui est positionné sur un côté de deuxième palier (22) et forme l'extrémité supérieure ; et un élément annulaire prévu de manière démontable entre le premier cylindre (72) et le deuxième cylindre (74).

20. Gabarit d'assemblage de ligne d'arbre d'un appareil de génération de puissance du type à énergie renouvelable selon la revendication 19,
dans lequel chacun du premier cylindre (72) et du deuxième cylindre (74) comprend une paire de demi-coquilles qui peuvent être divisées.
